Europäisches Patentamt

European Patent Office

Office européen des brevets

(11) Publication number: 0 336 780 B1

# EUROPEAN PATENT SPECIFICATION

(45) Date of publication of patent specification: 12.07.95　(51) Int. Cl.⁶: C08F 255/00, C08L 23/16

(21) Application number: 89303476.9

(22) Date of filing: 07.04.89

Divisional application 94103868.9 filed on 07/04/89.

(54) Thermoplastic resin or elastomer composition having excellent paint adhesion and laminate comprising layer of said thermoplastic elastomer and polyurethane layer.

(30) Priority: 08.04.88 JP 84991/88
08.04.88 JP 84992/88
08.04.88 JP 84993/88
24.05.88 JP 124891/88

(43) Date of publication of application:
11.10.89 Bulletin 89/41

(45) Publication of the grant of the patent:
12.07.95 Bulletin 95/28

(84) Designated Contracting States:
AT BE CH DE ES FR GB GR IT LI LU NL SE

(56) References cited:
EP-A- 0 002 286

PATENT ABSTRACTS OF JAPAN vol. 8, no.
114 (C-225)(1551) 26 May 1984, & JP-A- 59 27
935

(73) Proprietor: MITSUI PETROCHEMICAL INDUS-
TRIES, LTD.
2-5, Kasumigaseki 3-chome
Chiyoda-ku
Tokyo 100 (JP)

(72) Inventor: Maeda, Toshiyuki Mitsui Petro-
chemical Ind. Ltd.
3, Chigusa-kaigan
Ichihara-shi
Chiba-ken (JP)
Inventor: Otawa, Yasuhiko Mitsui Petrochemi-
cal Ind. Ltd.
3, Chigusa-kaigan
Ichihara-shi
Chiba-ken (JP)
Inventor: Okamoto, Katsuo Mitsui Petrochemi-
cal Ind. Ltd.
3, Chigusa-kaigan
Ichihara-shi
Chiba-ken (JP)

(74) Representative: Collier, Jeremy Austin Grey et
al
J.A.KEMP & CO.
14, South Square
Gray's Inn
London WC1R 5LX (GB)

**Description**

The present invention relates to a thermoplastic elastomer composition which has excellent paint adhesion and excellent bondability to, for example, a metal and which has excellent rubbery elasticity, moldability and heat resistace, to a laminate comprising a layer of said thermoplastic elastomer and a polyurethane layer, and to processes for preparing said composition and laminate.

It has been known that a thermoplastic elastomer is a cured rubber substitute of the energy-saving and resource-saving type.

As the thermoplastic elastomer of this type, there is known, for example, an olefin type thermoplastic elastomer composed mainly of an ethylene/propylene/uncojugated diene copolymer rubber. Although this elastomer has excellent performance as a thermoplastic elastomer, the paint adhesion and the bondability to various resins or metals are insufficient, and therefore the application range of this thermoplastic elastomer is extremely restricted.

An attempt has been made to improve the bondability of this thermoplastic elastomer by modifying the above-mentioned rubber component with, for example, maleic anhydride. However, in this case, characteristics such as the rubbery elasticity and moldability are drastically degraded, though the bondability is improved.

Even at present, the paint adhesion and the bondability to various resins or metals are similarly insufficient in thermoplastic resins such as polyolefins.

Namely, a thermoplastic resin or elastomer which not only has excellent rubbery elasticity and moldability characteristics but also excellent paint adhesion and bondability to various resins and metals is not known.

A polyvinyl chloride sheet having on the surface a leather pattern formed by embossing the surface and boarding the embossed surface has been heretobefore used for interior automotive trims such as a floor, a wall and a roof.

However, since a plasticizer is incorporated in polyvinyl chloride per se, this polyvinyl chloride sheet is defective in that the surface becomes soft and sticky, and, by evaporation of the plasticizer, the sheet is made rigid or the atmosphere in an automobile becomes blurred.

A laminate formed by backing a polyvinyl chloride sheet with a formed layer and, if necessary, further with a resin aggregate layer has been used instead of a single-layer sheet of polyvinyl chloride.

This laminate is prepared by the following steps.

(1) Soft polyvinyl chloride is calendered to form a sheet.

(2) A mixture of a polyol and a polyisocyanate is coated on the surface of this sheet and a urethane treatment is carried out to attain a delustering effect.

This delustering treatment is performed to prevent the sheet surface from becoming lustrous at the heat-molding step (7) described hereinafter.

(3) The sheet is subjected to an embossing treatment to form a boarded leather pattern on the surface.

(4) The back surface of the sheet having the embossed surface is subjected to a flame treatment and is molten, and a sheet of a polyurethane foam separately supplied is press-bonded to the molten back surface of the sheet by means of a roll.

(5) An adhesive layer is formed on the polyurethane foam sheet side of the formed laminate comprising the polyvinyl chloride sheet and the polyurethane foam sheet.

(6) A resin aggregate having a predetermined shape is formed by a heat-forming method such as vacuum forming or air-pressure forming.

(7) The polyvinyl chloride sheet/polyurethane foam sheet laminate is preliminarily heated and placed on the resin aggregate formed body, and the assembly is heat-molded and integrated.

As is apparent from the foregoing description, the conventional laminate to be used for interior automotive trims is defective in that the preparation steps are very complicated.

Furthermore, this laminate comprises a soft polyvinyl chloride sheet containing a plasticizer. As pointed out above, the laminate is disadvantageous in that the surface is soft and sticky and the atmosphere in an automobile becomes blurred.

We have researched with a view to solving the foregoing problems involved in the conventional techniques and providing a thermoplastic elastomer composition having excellent paint adhesion and excellent heat bondability to various resins and metals and also having excellent rubbery elasticity, moldability and heat resistance.

More specifically, in accordance with the present invention, there is provided a thermoplastic elastomer composition which is obtainable by a process comprising dynamically heat-treating at from 150 to 280°C, in the presence of an organic peroxide:

2

(i) a blend comprising 100 parts by weight in total of components (a) and (b) with components (c) and (d); or

(ii) a blend comprising 100 parts by weight in total of components (a) and (b) with component (c), and blending under heating at 140 to 250°C the dynamically heat treated product with component (d);

wherein

component (a)    is a peroxide-crosslinkable olefin-type copolymer

component (b)    is an olefin-type plastic

component (c)    is 0.01 to 10 parts by weight of an unsaturated carboxylic acid or an ester or anhydride thereof

and

component (d)    is 0.01 to 10 parts by weight of a monomer containing at least one amino group.

Furthermore, in accordance with the present invention, there is provided a laminate comprising a layer (A) of a thermoplastic elastomer obtainable by dynamically heat treating, in the presence of an organic peroxide, a blend of 100 parts by weight of components (a) and (b) with component (c) and blending under heat 100 parts by weight of the dynamically heat treated product with component (d), and a layer (B) of a polyurethane.

In accordance with the present invention there is also provided a process for producing a thermoplastic elastomer composition which process comprises dynamically heat-treating at from 150 to 280°C, in the presence of an organic peroxide:

(i) a blend comprising 100 parts by weight in total of components (a) and (b) with components (c) and (d); or

(ii) a blend comprising 100 parts by weight in total of components (a) and (b) with component (c), and blending under heating at 140 to 250°C the dynamically heat treated product with component (d).

Furthermore, in accordance with the present invention there is provided a process for producing a laminate which comprises forming a layer (A) of a thermoplastic elastomer produced as defined above and laminating layer (A) with a layer (B) of a polyurethane.

The blend to be dynamically heat-treated may further comprise at least one of components (e), (f) and (g):

wherein component (e) is 0.01 to 100 parts by weight of a peroxide-noncrosslinkable rubbery substance,

component (f) is 0.01 to 200 parts by weight of a mineral oil type softener, and

component (g) is 0.01 to 100 parts by weight of a fibrous filler, per 100 parts by weight of the total amount of components (a) and (b).

The present invention includes an embodiment (1) in which components (a), (b) and (c) are dynamically heat-treated in the presence of an organic peroxide and component (d) is blended in the heat-treated mixture, and an embodiment (2) in which the components (a), (b), (c) and (d) are dynamically heat-treated in the presence of an organic peroxide.

Each of the foregoing embodiments (1) and (2) further includes the modification in which the blend to be dynamically heat-treated further comprises specific amounts of components (e), (f) and (g) per 100 parts by weight of the sum of the components (a) and (b).

The most important technical characteristic of the thermoplastic elastomer composition of the present invention resides in that the respective components are dynamically heat-treated in the presence of an organic peroxide in each embodiment.

This thermoplastic elastomer composition has excellent paint adhesion and excellent heat bondability to various resins and metals and has excellent rubbery elasticity, moldability and heat resistance. Furthermore, a laminate comprising a layer of this thermoplastic elastomer and a layer of a polyurethane has excellent tensile strength, heat resistance, softness and light weight characteristics and is especially valuable for use as an interior automotive trim.

In the thermoplastic elastomer composition of the present invention, the peroxide-crosslinkable olefin type copolymer rubber component (a) imparts a rubbery elasticity to the resulting composition. A partially crosslinked copolymer rubber has excellent heat resistance.

The olefin type plastic component (b) imparts flowability at a high temperature, whereby a desired moldability is retained by the elastomer.

The unsaturated carboxylic acid, ester or anhydride component (c) improves the heat bondability to various resins and metals and the monomer containing at least one amino group in the molecule chain component (d) drastically improves the paint adhesion and also improves the bondability to a polyurethane layer.

3

The peroxide-noncrosslinkable rubbery substance component (e) and the mineral oil type softener component (f) improve the flowability of the rubber composition and impart a moldability, as well as the olefin type plastic component (b), and the fibrous filler component (g) imparts a dimension stability (small linear expansion coefficient) and a shape stability (appropriate rigidity) to the composition.

Components (e), (f) and (g) can be incorporated before or during the heat treatment of the composition.

In the thermoplastic elastomer composition, by the actions of the above-mentioned respective components, the paint adhesion and the heat bondability to various resins and metals are prominently improved while the desired rubbery elasticity, heat resistance and moldability are retained. If the fibrous filler is incorporated, improvement of the dimension stability and shape stability can be attained in addition to the above-mentioned effects.

The components of the thermoplastic elastomer composition of the present invention will now be described in more detail.

(a) Peroxide-crosslinkable olefin type copolymer rubber

The peroxide crosslinkable olefin type copolymer rubber used in the present invention is an amorphous elastic copolymer composed mainly of an olefin, such as an ethylene/propylene copolymer rubber, an ethylene/propylene/uncojugated diene rubber or an ethylene/butadiene copolymer rubber, and when this rubber is mixed with an organic peroxide and the mixture is kneaded under heating, the rubber is crosslinked and the flowability is reduced or the flowability is lost. Examples of the uncojugated diene are dicyclopentadiene, 1,4-hexadiene, dicyclooctadiene, methylenenorbornene and ethylidenenorbornene.

Preferred copolymer rubbers are ethylene/propylene copolymer rubbers and ethylene/propylene/unconjugated rubbers in which the molar ratio of ethylene units to propylene units (ethylene/propylene) is from 50/50 to 90/10, especially from 55/45 to 85/15. Ethylene/propylene/unconjugated copolymer rubbers, particularly an ethylene/propylene/5-ethylidene-2-norbornene copolymer rubber and an ethylene/propylene/5-ethylidene-2-norbornene/dicyclopentadiene quadripolymer, are especially preferred because a thermoplastic elastomer having excellent heat resistance, tensile characteristics and repulsive elasticity is obtained.

It is preferred that the Mooney viscosity $ML_{1+4}$ ($100\,^{\circ}C$) of the copolymer rubber is 10 to 150, especially 40 to 120. If the Mooney viscosity of the copolymer rubber is within this range, an elastomer composition having excellent tensile characteristics and flowability is obtained.

It also is preferred that the iodine value (unsaturation degree) of the copolymer rubber is less than 16. If the iodine value is within this range, a thermoplastic elastomer which has well-balanced flowability and rubbery characteristics is obtained.

(b) Olefin type plastic

The olefin type plastic used in the present invention is a crystalline high-molecular-weight solid product obtained by polymerizing at least one olefin by a high-pressure process or a low-pressure process. As an instance of this resin, there can be mentioned a homopolymer or copolymer resin of at least one isotactic or syndiotactic monoolefin. Typical resins are commercially available.

As the starting olefin, there are appropriately used, for example, ethylene, propylene,1-butene, 1-pentene, 1-hexane, 2-methyl-1-propane, 3-methyl-1-pentene, 4-methyl-1-pentene, 5-methyl-1-hexane, 1-octene, 1-decene and mixtures of two or more of these olefins. As the polymerization form, either random polymerization or block polymerization can be adopted, so far as a resinous product is obtained.

A peroxide-separating olefin type plastic and polyethylene are especially preferred as the olefin type plastic.

By the preoxide-separating olefin type plastic is meant an olefin type plastic characterized in that when it is mixed with a peroxide and the mixture is kneaded under heating, the plastic is thermally decomposed to reduce the molecular weight and the flowability of the resin is increased. For example, there can be mentioned isotactic polypropylene and copolymers of propylene with small amounts of other $\alpha$-olefins, such as a propylene/ethylene copolymer, a propylene/1-butene copolymer, a propylene/1-hexene copolymer and a propylene/4-methyl-1-pentene copolymer. It is preferred that the melt flow rate (ASTM D-1238-65T, $230\,^{\circ}C$) of the olefin type plastic used in the present invention is 0.1 to 50, especially 5 to 20. In the present invention, the olefin type plastic improves the flowability and heat resistance of the composition.

(c) Unsaturated carboxylic acid or an ester or anhydride thereof

As the unsaturated carboxylic acid, ester or anhydride component (c) there can be mentioned $\alpha,\beta$-unsaturated carboxylic acids such as acrylic acid, methacrylic acid, maleic acid, fumaric acid, itaconic acid, citraconic acid and tetrahydrophthalic acid, unsaturated carboxylic acids such as bicyclo[2,2,1]hepto-2-ene-5,6-dicarboxylic acid, $\alpha,\beta$-unsaturated carboxylic anhydrides such as maleic anhydride, itaconic anhydride, citraconic anhydride and tetrahydrophthalic anhydride, unsaturated carboxylic anhydrides such as bicyclo-[2,2,1]hepto-2-ene-5,6-dicarboxylic anhydride, and unsaturated carboxylic acid esters such as methyl acrylate, methyl methacrylate, dimethyl maleate, monomethyl maleate, diethyl fumerate, dimethyl itaconate, diethyl citraconate, dimethyl tetrahydrophthalate anhydride and dimethyl bicyclo[2,2,1]hepto-2-ene-5,6-dicarboxylate. Of these acids and derivatives, maleic acid, bicyclo[2,2,1]hepto-2-ene-5,6-dicarboxylic acid and anhydrides thereof are preferred. Component (c) improves the bondability of the composition.

(d) Monomer containing at least one amino group

As the monomer containing at least one amino group in the molecule chain component (d), there can, for example, be mentioned amino alcohols such as 2-aminoethanol, 3-amino-1-propanol, 4-amino-1-butanol, 5-amino-1-pentanol, 2-amino-1-butanol, 2-amino-2-methyl-1-propanol, 2-amino-2-methyl-1,3-propanediol, 2-amino-2-ethyl-1,3-propanediol and N-aminoethylethanolamine, diamines such as ethylenediamine, propylenediamine, trimethyldiamine, tetramethylenediamine, pentamethylenediamine and hexamethylenediamine, polyamines such as diethylenetriamine, triethylenetetramine and tetraethylenepentamine, dicarboxylic acid amides such as oxamide, malonamide, succinamide, adipamide, malamide and d-tartramide, hydrazines such as methylhydrazine and ethylhydrazine, and aromatic amines such as phenylenediamine, toluenediamine, N-methylphenylenediamine, aminodiphenylamine and diaminodiphenylamine.

Component (d) improves the paint adhesion to the elastomer composition.

Among the foregoing monomers, aminoalcohols and polyamines are preferred, and N-aminoethylethanolamine and triethylenetetramine are especially preferred.

If a blend of the thermoplastic elastomer with component (d) is heat-treated, the bondability of the obtained thermoplastic elastomer to a polyurethane is highly improved.

(e) Peroxide-noncrosslinkable rubbery substance

The peroxide-noncrosslinkable rubbery substance used in the present invention is a hydrocarbon rubbery substance characterized in that even if the rubbery substance is mixed with a peroxide and the mixture is kneaded under heating, the flowability is not reduced. For example, there can be mentioned polyisobutylene, butyl rubber (IIR), a propylene/ethylene copolymer rubber having a propylene content of at least 70 mole% and atactic polypropylene. In view of the performance and handling easiness, polyisobutylene and butyl rubber (IIR) are preferred.

Component (e) improves the flowability of the elastomer composition, and a rubbery substance having a Mooney viscosity lower than 60 is especially preferred.

Furthermore, component (e) improves the permanent set of the thermoplastic elastomer composition.

(f) Mineral oil type softener

The mineral oil type softener used as component (f) is a high-boiling-point petroleum faction which is ordinarily used for roll-processing of a rubber to weaken the intermolecular force of the rubber and facilitate the processing and which assists dispersion of an incorporated filler such as carbon black or white carbon or reduces the hardness of a cured rubber to increase the softness and elasticity. This petroleum fraction is divided into a paraffinic fraction, a naphthenic fraction and an aromatic fraction.

(g) Fibrous filler

A fibrous filler having a diameter of about 0.1 to about 15 $\mu$m and a length of about 5 $\mu$m to about 10 mm is preferably used as component (g) in the present invention. As specific examples, there can be mentioned a glass fiber (for example chopped strand, roving, milled glass fiber or glass flake), wollastonite, a cut fiber, a rock fiber, a microfiber, a processed mineral fiber, a carbon fiber, a gypsum fiber, an aromatic polyamide fiber and a potassium titanate fiber. A milled glass fiber, a glass flake and a potassium titanate fiber are preferred. In order to improve the wettability of the fibrous filler with the thermoplastic elastomer as the matrix, use of a fibrous filler treated with a coupling agent such as a silane coupling agent, a chromium coupling agent or a titanium coupling agent is especially preferred.

The fibrous filler can be added at the grafting step or the subsequent step.

Preparation of the thermoplastic elastomer composition

100 to 10 parts by weight, preferably 95 to 10 parts by weight, especially preferably 95 to 40 parts by weight, of the peroxide-crosslinkable olefin type copolymer rubber (a) and 0 to 90 parts by weight, preferably 5 to 90 parts by weight, especially preferably 5 to 60 parts by weight, of the olefin type plastic (b) [the sum of the components (a) and (b) is 100 parts by weight], and the components (c) and (d) are dynamically heat-treated according to any of the following embodiments:

Embodiment 1

In this embodiment, components (a), (b) and (c) are dynamically heat-treated in the presence of an organic peroxide and component (d) is blended in the heat-treated mixture under heating.

According to a preferred example of embodiment 1, 100 parts by weight in total of component (a) and component (b) is blended with 0.01 to 10 parts by weight, preferably 0.1 to 5 parts by weight, of an unsaturated carboxylic acid anhydride (c) and the blend is dynamically heat-treated in the presence of an organic peroxide, and 0.01 to 10 parts by weight, preferably 0.1 to 10 parts by weight, of a monomer (d) containing at least one amino group is blended under heating into the obtained thermoplastic elastomer, whereby the intended thermoplastic elastomer composition is prepared. The heating is carried out at a temperature of 140 to 250°C, and a thermoplastic elastomer composition having excellent characteristics can be obtained.

Embodiment 2

In this embodiment, components (a), (b), (c) and (d) are dynamically heat-treated simultaneously in the presence of an organic peroxide.

According to a preferred example of this embodiment 3, 100 parts by weight in total of component (a) and component (b) is blended with 0.01 to 10 parts by weight, preferably 0.1 to 5 parts by weight of an unsaturated carboxylic acid or an ester or anhydride thereof (c) and 0.01 to 10 parts by weight, preferably 0.1 to 10 parts by weight, of a monomer (d) containing at least one amino group, and the blend is dynamically treated in the presence of an organic peroxide, whereby a desired thermoplastic elastomer composition is obtained. In embodiment 2, the same heating condition as adopted in embodiment 1 is adopted.

Each of the foregoing embodiments 1 and 2 includes the following modification.

According to this modification, at least one of 0.01 to 100 parts by weight, preferably 5 to 100 parts by weight, especially preferably 5 to 50 parts by weight, of a peroxide-noncrosslinkable rubbery substance (e), 0.01 to 200 parts by weight, preferably 3 to 100 parts by weight, especially preferably 3 to 80 parts by weight, of a mineral oil type softener (f) and 0.01 to 100 parts by weight, preferably 1.0 to 100 parts by weight, especially preferably 4 to 35 parts by weight of a fibrous filler (g), per 100 parts by weight of the sum of components (a) and (b), is blended in the composition to be dynamically heat-treated, and the blend is dynamically heat-treated in the presence of an organic peroxide to effect partial crosslinking.

By incorporating component (a) in the above-mentioned amount, a composition which has excellent rubbery characteristics such as the rubbery elasticity and which has high flowability and moldability is obtained.

If components (b), (e) and (f) are incorporated in the above-mentioned amounts, a composition which has excellent rubbery characteristics such as the rubbery elasticity and which has high flowability and moldability is obtained.

Furthermore, by incorporating components (c) and (d) in the above-mentioned amounts, the paint adherence, the moldability and the heat bondability to resins or metals are highly improved. Moreover, if component (g) is incorporated in the above-mentioned amount, the flowability, dimension stability and shape stability are improved.

In accordance with still another embodiment of the present invention, there is provided a laminate comprising (A) a layer of a thermoplastic elastomer of embodiment (1) preferably formed by dynamically heat-treating a blend of 100 parts by weight of a mixture comprising components (a) and (b) at a weight ratio of from 10/90 to 90/10, preferably from 20/80 to 80/20, and 0.01 to 10 parts by weight of an unsaturated polyvalent carboxylic acid or its anhydride (c) in the presence of an organic peroxide to effect partial crosslinking, blending 0.01 to 10 parts by weight of a monomer (d) containing at least one amino group into the formed partially crosslinked thermoplastic elastomer composition and heat-treating the blend, and (B) a layer of a polyurethane. This laminate has excellent tensile strength, heat resistance, softness and light weight characteristic, has no surface stickiness and is very valuable as an interior automotive trim. Furthermore, since component (c) is blended and heat-treated, layer (A) of this laminate has excellent flowability, aging resistance and rubbery elasticity and strong bonding is attained in the interface between layers (A) and (B).

The polyurethane constituting the layer (B) has oil resistance and scratch resistance, and therefore, predetermined oil resistance and scratch resistance can be retained on one surface of the laminate.

If layer (B) is constructed by a polyurethane foam, softness and light weight characteristics can be imparted to the laminate.

At least one additive selected from (e) a peroxide-noncrosslinkable rubber substance, (f) a mineral oil type softener and (g) a fibrous filler can be incorporated into layer (A)-constituting thermoplastic elastomer comprising the components (a), (b), (c) and (d). Namely, up to 100 parts by weight of component (e), up to 200 parts by weight of component (f) and up to 100 parts by weight of component (g) can be incorporated per 100 parts by weight of the sum of the components (a) and (b).

Additives (e) and (f) improve the molding processability of the thermoplastic elastomer, and additive (g) improves the rigidity.

In the laminate of the present invention, a polyolefin type plastic can be blended into the partially crosslinked thermoplastic elastomer composition. In this case, the polyolefin type plastic is preferably blended into the thermoplastic elastomer composition at a weight ratio of from 0/100 to 75/25. Namely, it is preferred that the polyolefin type plastic is blended in an amount of up to 300 parts by weight, especially up to 200 parts by weight, per 100 parts by weight of the thermoplastic elastomer composition.

Known polyolefin plastics can be used as the polyolefin plastic to be blended into the thermoplastic elastomer composition. For example, there can be mentioned high-density polyethylene, medium-density polyethylene, low-density polyethylene, isotactic polypropylene, and copolymers of propylene with small amounts of other $\alpha$-olefins, such as a propylene/ethylene copolymer, a propylene/1-butene copolymer, a propylene/1-hexene copolymer and a propylene/4-methyl-1-pentene copolymer. It is preferred that the melt index (ASTM D-1238-65T, 230°C) of the polyolefin type plastic to be blended is 0.1 to 50, especially 5 to 20 g/10min. In the present invention, the polyolefin type plastic improves the flowability and heat resistance of the composition.

Polyurethane layer (B)

All known polyurethanes can be used as the polyurethane of layer (B) to be laminated with thermoplastic elastomer layer (A). For example, there can be used polyester type polyurethanes and polyether type polyurethanes classified according to the kind of the starting polyol component, and there can be used soft, semi-hard and hard polyurethanes classified according to the hardness.

In the case where the laminate of the present invention is used as an interior trim of a vehicle such as an automobile, it is preferred that layer (B) be shaped in the form of a polyurethane sheet. In this case, in view of the ease of lamination, use of a thermoplastic polyurethane is preferred.

A polyurethane foam can be used as layer (B). In view of the softness, heat resistance and sound adsorption, a soft foam having a substantially continuous cell structure and a foaming ratio of about 10 to about 100 is preferably used.

Structure of Laminate

The laminate of the present invention can be prepared by laminating the thermoplastic elastomer layer (A) with the polyurethane layer (B).

The lamination method is appropriately selected according to the shape or size of the final product and the required properties. For example, the following methods can be adopted.

In the case where a polyurethane is used as the polyurethane layer (B), the following methods can be adopted.

(1) The preliminarily formed layers (A) and (B) are heat-fusion-bonded at a temperature higher than the temperature where at least one of layers (A) and (B) is molten, for example by using a calender roll forming machine or a compression forming machine.

(2) The preliminarily sheet-formed layer (B) is heat-fusion-bonded to layer (A) being extrusion-molded or calender-molded.

(3) Layers (A) and (B) are co-extrusion-molded and heat-fusion-bonded by using a multi-layer extrusion molding machine.

In the case where a polyurethane foam is used as polyurethane layer (B), there can be adopted a method in which a graft-modified polyolefin type elastomer is formed into a sheet by extrusion molding or calender molding, and this sheet is laminated with a polyurethane foam sheet by using a compression roll.

In the so-prepared laminate of the present invention, the thickness of the thermoplastic elastomer layer (A) is generally 0.1 to 50 mm and the thickness of the polyurethane layer (B) is generally 5 $\mu$m to 10 mm, though the thickness can be changed more or less, for example according to the intended use.

Additives can be incorporated in the thermoplastic elastomer composition of the present invention, so far as the paint adhesion, flowability (moldability), rubbery properties and heat bondability of the composition are not degraded. For example, fillers such as calcium carbonate, calcium silicate, clay, kaolin, talc, silica, diatomaceous earth, mica powder, alumina, barium sulfate, aluminum sulfate, calcium sulfate, basic magnesium carbonate, molybdenum disulfide, graphite, glass fibers, glass beads, shirasu balloons, and carbon fibers, and colorants such as carbon black, titanium oxide, zinc flower, red iron oxide, ultramarine, prussian blue, azo pigment, nitroso pigment, lake pigment and phthalocyanine pigment can be incorporated.

Furthermore, in the present invention, known heat-resistant stabilizers such as phenol type, sulfite type, phenylalkane type, phosphite type and amine type stabilizers, aging-preventing agents, weathering agents, antistatic agents and lubricants such as metal soaps and waxes can be incorporated in amounts customarily incorporated into olefin type plastics or olefin type copolymer rubbers.

In the present invention, the blend of the above-mentioned components is dynamically heat-treated in the presence of an organic peroxide to effect partial crosslinking.

By the term "dynamic heat treatment" is meant kneading in the molten state.

In the present invention, as the organic peroxide, there can be used, for example, dicumyl peroxide, di-tert-butyl peroxide, 2,5-dimethyl-2,5-di-(tert-butylperoxy)hexane, 2,5-dimethyl-2,5-di-(tert-butylperoxy)hexine-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dicyclobenzoyl peroxide, tert-butyl peroxybenzoate, tert-butyl perbenzoate, tert-butylperoxyisopropyl carbonate, diacetyl peroxide, lauroyl peroxide and tert-butylcumyl peroxide. In view of the smell and scorch stability, 2,5-dimethyl-2,5 di-(tert-butyl-peroxy)hexane, 2,5-dimethyl-2,5-di-(tert-butylperoxy)hexine-3, 1,3-bis(tert-butylperoxyisopropyl)-benzene, 1,1-bis(tert-butylperoxy)-3,3,5-trimethylcyclohexane and n-butyl-4,4-bis(tert-butylperoxy)valerate are preferred, and 1,3-bis(tert-butylperoxyisopropyl)benzene is especially preferred.

The amount of organic peroxide incorporated is adjusted to 0.01 to 3% by weight, preferably 0.05 to 1% by weight, based on the sum of components (a), (b) and (c).

If the amount of organic peroxide incorporated is adjusted within the above-mentioned range, in the obtained thermoplastic elastomer, the heat resistance, tensile characteristics and rubbery properties such as elastic recovery and repulsive elasticity become satisfactory, and the moldability is improved.

In the present invention, at the partial crosslinking treatment with the above-mentioned organic peroxide, there can be used peroxy-crosslinking assistants such as sulfur, p-quinone dioxime, p,p'-dibenzoylquinone dioxime, N-methyl-4,4-dinitrosoaniline, nitrobenzene, diphenylguanidine and trimethylolpropane-N,N-m-phenylene dimaleimide, and polyfunctional vinyl monomers such as divinylbenzene, triallyl cyanurate, polyfunctional methacrylate monomers, e.g., ethylene glycol dimethacrylate, diethylene glycol dimethacrylate, polyethylene glycol dimethacrylate, trimethylolpropane trimethacrylate and allyl methacrylate, and vinyl butyrate and vinyl stearate. By addition of a compound as mentioned above, a uniform and mild reaction can be expected. In the present invention, use of divinylbenzene is especially preferred, because divinylbenzene is easy to handle and has a good compatibility with the olefin type rubber and olefin type plastic as the main components of the blend to be treated. Furthermore, since divinylbenzene has an organic peroxide-solubilizing action and acts as a dispersing assistant for the peroxide, the heat treatment effect is uniformalized and a composition which has well-balanced flowability and physical properties can be obtained. In the present invention, it is preferred that the above-mentioned crosslinking assistant or polyfunctional vinyl monomer is incorporated in an amount of 0.1 to 2% by weight, especially 0.3 to 1% by weight, based on the entire blend to be treated. In the case where the amount of the crosslinking assistant or polyfunctional vinyl monomer exceeds 2% by weight, when the amount of the organic peroxide is large, the crosslinking reaction is advanced and the flowability of the composition is degraded, or when the amount of the organic peroxide is small, the above-mentioned assistant or monomer is left as unreacted monomer in the composition and the unreacted monomer changes the physical properties by heat history during processing and molding of the composition. Accordingly, incorporation of

8

the crosslinking assistant or polyfunctional vinyl monomer in an excessive amount should be avoided.

In the order to promote decomposition of the organic peroxide, a tertiary amine such as triethylamine, tributylamine or 2,4,6-tris(dimethylamino)phenol or a decomposition promoting agent such as a naphthenic acid salt of aluminium, cobalt, vanadium, copper, calcium, zirconium, manganese, magnesium, lead or mercury can be used.

It is preferred that kneading be carried out in a closed apparatus in an atmosphere of an inert gas such as nitrogen or carbon dioxide. The temperature is such that the half-value period of the organic peroxide used is within 1 minute. Namely, the temperature is 150 to 280°C, preferably 170 to 240°C. The kneading time is generally 1 to 20 minutes, preferably 1 to 10 minutes. The applied shearing force is ordinarily 10 to $10^4$ sec $^{-1}$, preferably $10^2$ to $10^3$ sec$^{-1}$, expressed as the shearing speed.

As the kneading apparatus, there can be used a mixing roll, an intensive mixer such as a Banbury mixer, and a single-screw or twin-screw extruder.

According to the present invention, by the above-mentioned dynamic heat treatment, an uncrosslinked, partially crosslinked or completely crosslinked and modified thermoplastic elastomer composition can be obtained.

In the present invention, by "uncrosslinked", it is meant that the gel content measured, for example, by the following method is lower than 10%, and by "partially or completely crosslinked", it is meant that the gel content measured, for example, by the following method is at least 10%, especially at least 20%.

Measurement of gel content

A sample (100mg) of a thermoplastic elastomer is cut into a strip of 0.5 mm x 0.5 mm x 0.5 mm and immersed in 30 ml of cyclohexane at 23°C for 48 hours in a closed vessel. The sample is taken out on a filter paper and dried at room temperature for more than 72 hours until the weight is constant.

The weight obtained by subtracting the weight of the cyclohexane-insoluble components (for example the fibrous filler, the filler and the pigment) other than the polymer component and the weight of the olefin type plastic component before the immersion in cyclohexane from the weight of the residue after the drying is designated as the "corrected final weight (Y)".

The weight of the peroxide-crosslinkable olefin type copolymer rubber in the sample, that is the weight obtained by subtracting (1) the cyclohexane-soluble components (for example, the mineral oil and the plasticizer) other than the peroxide-crosslinkable olefin type copolymer, (2) the olefin type plastic component and (3) the cyclohexane-insoluble components (for example the fibrous filler, the filler and the pigment) other than the polymer component from the weight of the sample is designated as the "corrected initial weight (X)".

The gel content is calculated according to the formula:

Gel content (% by weight) = [corrected final weight (Y)]/[corrected initial weight (X)] x 100

The thermoplastic elastomer of the present invention is obtained by blending the above-mentioned components at a specific ratio and dynamically heat-treating the blend in the presence of an organic peroxide. The composition has excellent in mechanical characteristics, moldability, paint adhesion and bondability to resins and metals. The thermoplastic elastomer composition can be molded by an ordinary molding apparatus for thermoplastic resins and especially, the composition can be easily molded by extrusion molding, calender molding or injection molding.

The thermoplastic elastomer composition of the present invention has excellent in rubbery characteristics, moldability, paint adhesion, bondability to resins and metals, mechanical strength, heat resistance and softness, and the composition can be molded by a known molding apparatus for ordinary thermoplastic plastics and is especially suitable for extrusion molding, calender molding or injection molding. These excellent characteristics are attained by synergistic actions of the respective components. The paint adhesion and the bondability to resins or metals are especially improved by incorporation of components (c) and (d), and the composition is preferably used for non-primer coating of a molded article, production of laminates and coating of metals. These effects will become apparent from the Examples given hereinafter.

Furthermore, the laminate of the present invention is lighter in weight than, for example soft polyvinyl chloride. Stickiness caused by a plasticizer is prevented and excellent heat resistance and dimension stability are attained. Accordingly, the laminate of the present invention can be effectively used for interior automotive trims, sealing materials, furniture, construction materials, housings of household electric appliances, bags, sport goods and office supplies.

The present invention will now be described in further detail in the following Examples.

Molding conditions adopted in the Examples for obtaining test samples from the elastomers prepared in the Examples and methods for testing the samples are described below.

(1) Injection molding

Molding machine:     Dina Melter (supplied by Meiki Seisakusho)
Injection pressure:     1000 kg/cm$^2$ (primary pressure), 700 kg/cm$^2$ (secondary pressure)
Molding temperature:     220°C
Injection speed:     maximum
Molding speed:     90 s/cycle
Gate:     direct gate (land length = 10 mm, width = 10mm, thickness = 3 mm)
Molded article:     length = 150 mm, width = 120 mm, thickness = 3 mm

(2) Extrusion molding

T-die sheets were extrusion-molded under following conditions.
Molding machine:     40 mm-diameter extruder (supplied by Toshiba Kikai)
Screw:     full-flight type, L/D = 28, CR = 3.5
Screen bag:     two 80-mesh bags
Molding temperature:     160°C on hopper side, 210°C on die side
Die:     coat hunger type
Die lip:     1.5 mm
Take-out speed:     5 m/min

(3) Basic properties

Thermoplastic elastomer

A test piece was punched out from a square board having a thickness of 3 mm, which was obtained by injection molding as described in (1) above, and the basic properties were measured according to the following methods.

Tensile characteristics:     the stress (M100) at elongation of 100%, the tensile strength (Tb) and the elongation (Eb) at break were measured according to the method of JIS K-6301.
Spring hardness (Hs):     measured by method A of JIS K-6301 and Shore D method of ASTM D-2240.
Initial flexural modulus (FM):     measured according to method of ASTM D-790.
Permanent set (PS):     the residual elongation at 100% elongation was measured according to method of JIS K-6301.
Softening point (SP):     the temperature at which a needle having a diameter of 0.8 mm penetrated in 0.1 mm in the sample was measured at a temperature-elevating rate of 20°C/min under a load of 49 g by TMA measuring apparatus supplied by du Pont.

(4) Peeling strength of coating

A. Preparation of sample

A urethane paint (polyol-isocyanate two-liquid type urethane paint)(R-271 supplied by Nippon Paint) was coated at a thickness of 35 to 40 μm on a molded article of the thermoplastic elastomer composition of the present invention.

B. Peeling test

Test piece:     strip having a width of 25 mm and a length of 100 mm
Test method:     180° peeling
Pulling speed:     25 mm/min
Bonding strength:     value (kg/cm) obtained by dividing the peeling load by the width of the test piece

(breaking of the base material is indicated by "breaking of base").

(5) Bonding strength

A. Preparation of test piece

An extrusion sheet (having a thickness of 1.0 mm) formed from the elastomer composition under the conditions described in (2) above was press-molded to an adherend having a thickness of 0.5 mm (mold-clamping pressure = 5 tons) to obtain a test piece having a size of 150 mm x 150 mm. The following adherends were used.

Nylon:  nylon 6 (Amilan CM1021 supplied by Toray) Polyurethane: P26 SRNAT supplied by Nippon Polyurethane

Steel sheet:  SS-41 supplied by Nippon Test Panel (treated by sand blasting and having a surface roughness of 30 microns)

B. Peeling test

Test piece:  strip having a width of 25 mm and a length of 100 mm
Test method:  180°C peeling
Pulling speed:  25 mm/min
Bonding strength:  value (kg/cm) obtained by dividing the peeling load by the width of the test piece (breaking of the base material is indicated by "breaking of base")

In the present invention, the content ratio between components (a) and (b) in the thermoplastic elastomer composition can be determined by the DSC method and/or the infrared adsorption analysis method. The contents of components (e) and (f) in the composition can be determined by the solvent extraction method (Soxhlet extraction method using acetone as the solvent) and/or the infrared adsorption analysis method. The content between component (g) and the organic components can be determined by the thermogravimetric analysis method.

The contents of grafted components (c) and (d) can be determined by the infrared adsorption analysis method or the chemical analysis method.

(6) Physical properties of sheets of thermoplastic elastomers for laminates

The physical properties of sheets obtained from elastomers obtained in Examples 92 through 101 by compression molding at 190°C were determined according to the following methods.

Strength:  the tensile strength (Tg, kgf/cm$^2$) at break was measured at a pulling speed of 200 mm/min according to the method of JIS K-6301.
Softness:  the torsion stiffness (kgf/cm$^2$) was measured according to the method of ASTM D-1043.
Moldability:  the melt flow rate (MFR) (g/10 min) was measured at 230°C under a load of 2.16 kg according to the method of ASTM D-1238.

Example 1

In a nitrogen atmosphere, 70 parts by weight of an ethylene/propylene/5-ethylidene-2-norbornene copolymer rubber [ethylene content = 70 mole%, iodine value = 15, Mooney viscosity $ML_{1+4}$ (100°C) = 120; hereinafter referred to as "EPDM(1)"] was kneaded with 30 parts by weight of polypropylene [melt flow rate (ASTM D-1238-65T, 230°C) = 13, density = 0.91 g/cm$^3$; hereinafter referred to as "PP")] at 190°C for 5 minutes by a Banbury mixer, and the kneaded mixture was passed through rolls and formed into a square pellet by a sheet cutter.

Then, the obtained square pellet was mixed and stirred with 0.5 part by weight of maleic anhydride (hereinafter referred to as "MAH"), 0.5 part by weight of divinylbenzene (hereinafter referred to as "DVB") and 0.3 part by weight of 1,3-bis(t-butylperoxyisopropyl)benzene [hereinafter referred to as "peroxide (A)"] by a Henschel mixer, and this pellet was extruded at 220°C in a nitrogen atmosphere by an extruder to obtain a thermoplastic elastomer composition.

The square pellet of the above composition was mixed and stirred with 1.0 part by weight of N-aminoethylethanolamine (hereinafter referred to as "AEA") by a Henschel mixer and the pellet was extruded at 220°C in a nitrogen atmosphere by an extruder to obtain a thermoplastic elastomer composition.

11

The physical properties, coating peeling strength and bonding strength of the obtained composition were measured. The obtained results as well as results obtained in the subsequent examples and comparative examples are shown in Table 1.

Examples 2 through 5

Thermoplastic elastomers were prepared in the same manner as described in Example 1 except that the amount incorporated of MAH, AEA, DVB and peroxide (A) were changed.

Example 6

A thermoplastic elastomer was prepared in the same manner as described in Example 1 except that 1.0 part by weight of diethylene triamine (hereinafter referred to as "DET") was used instead of AEA.

Example 7

A thermoplastic elastomer was prepared in the same manner as described in Example 1 except that 1.0 part by weight of triethylene tetramine (hereinafter referred to as "TET") was used instead of AEA.

Example 8

A thermoplastic elastomer was prepared in the same manner as described in Example 1 except that 1.0 part by weight of 2-aminoethanol (hereinafter referred to as "AE") was used instead of AEA.

Comparative Example 1

A thermoplastic elastomer was prepared in the same manner as described in Example 1 except that MAH and AEA were not incorporated.

Examples 9 through 12 and Comparative Example 2

A thermoplastic elastomer was prepared in the same manner as described in Example 1 except that the amounts incorporated of the respective components were changed.

Example 13

A blend was prepared by stirring 70 parts by weight of a pelletized ethylene/propylene/5-ethylldene-2-norbornene copolymer rubber [ethylene content = 70 mole%, iodine value = 10, Mooney viscosity $ML_{1+4}$ (100°C) = 70, extended oil amount = 20 parts by weight (accordingly, the amount of the rubber rubber component was 50 parts by weight); hereinafter referred to as "EPDM (2)"], 50 parts by weight of PP, 0.5 part by weight of MAH, 0.5 part by weight of DVB and 0.3 part by weight of peroxide (A) by a Henschel mixer.

The blend was extruded at 220°C in a nitrogen atmosphere by using a twin-screw extruder having an L/D ratio of 44 and a screw diameter of 53 mm to prepare a thermoplastic elastomer composition.

The square pellet of the composition was stirred with 1.0 part of AEA by a Henschel mixer to prepare a blend. The blend was extruded in a nitrogen atmosphere at 220°C by using a twin-screw extruder having an L/D ratio of 44 and a screw diameter of 53 mm to prepare a thermoplastic elastomer.

The basic physical properties, coating peeling strength and bonding strength were measured. The obtained results as well as results obtained in the subsequent examples and comparative Examples are shown in Table 2.

Examples 14 through 17 and Comparative Example 3

Thermoplastic elastomers were prepared in the same manner as described in Example 13 except that the amounts incorporated of the respective components were changed.

12

Example 18

A square pellet was prepared in the same manner as described in Example 1 from 70 parts by weight of EPDM (1), 30 parts by weight of PP, 10 parts by weight of a butyl rubber IIR-065 supplied by Esso, unsaturation degree = 0.8%; (hereinafter referred to as "IIR") and 30 parts by weight of a paraffinic process oil (hereinafter referred to as "oil"). In the same manner as described in Example 1, a thermoplastic elastomer composition was prepared from the obtained square pellet, 0.5 part by weight of MAH, 0.5 part by weight of DVB and 0.3 part by weight of peroxide (A).

A thermoplastic elastomer composition was prepared from the square pellet of the above composition and 1.0 part by weight of AEA in the same manner as described in Example 1.

The physical properties, coating peeling strength and bonding strength of the obtained composition were measured. The obtained results as well as results obtained in the subsequent examples and comparative examples are shown in Table 3.

Examples 19 through 22

Thermoplastic elastomer compositions were prepared in the same manner as described in Example 18 except that the amounts incorporated of MAH, AEA, DVB and peroxide (A) were changed.

Example 23

A thermoplastic elastomer composition was prepared in the same manner as described in Example 18 except that 1.0 part by weight of DET was used instead of AEA.

Example 24

A thermoplastic elastomer composition was prepared in the same manner as described in Example 18 except that 1.0 part by weight of TET was used instead of AEA.

Example 25

A thermoplastic elastomer composition was prepared in the same manner as described in Example 18 except that 1.0 part by weight of AE was used instead of AEA.

Comparative Example 4

A thermoplastic elastomer composition was prepared in the same manner as described in Example 18 except that MAH and AEA were not incorporated.

Examples 26 through 34

Thermoplastic elastomer compositions were prepared in the same manner as described in Example 18 except that the amounts incorporated of the components were changed as shown in Table 3.

Example 35

In a nitrogen atmosphere, 20 parts by weight of EPDM (1), 60 parts by weight of PP, 10 parts by weight of IIR, 10 parts by weight of the oil and 5 parts by weight of a milled glass fiber [Microglass Milled Fiber RX-EMFP supplied by Nippon Sheet Glass, fiber diameter = 11 $\mu$m, average fiber length = 240 $\mu$m; hereinafter referred to as "milled glass fiber")] were kneaded at 190°C for 5 minutes, and the kneaded mixture was passed through rolls and formed into a square pellet by a sheet cutter (first step).

Then, 100 parts by weight of the pellet was mixed and stirred with 0.3 part by weight of peroxide (A), 0.5 part by weight of DVB and 0.5 part by weight of MAH by a Henschel mixer.

Then, the pellet was extruded at 220°C in a nitrogen atmosphere by an extruder (second step).

Then, 100 parts by weight of the square pellet of the above composition and 1 part by weight of AEA were formed into a thermoplastic elastomer composition in the same manner as described in Example 1 (third step).

The physical properties, coating peeling strength and bonding strength of the obtained composition were measured. The obtained results as well as results obtained in the subsequent examples and comparative examples are shown in Table 4.

Examples 36 through 41

Thermoplastic elastomer compositions were prepared in the same manner as described in Example 35 except that the kind and amount of the filler were changed as shown in Table 4. The following fillers were used.

(Glass Flake)

A scaly filmy glass in which the content of a fraction passing through a 325-mesh sieve is at least 88% and which has a thickness of 3 $\mu$m Microglass Flake EF325 supplied by Nippon Sheet Glass; hereinafter referred to as "glass flake" .

(Potassium Titanate Fiber)

A potassium titanate fiber having a fiber diameter of 0.2 to 0.5 $\mu$m and an average fiber length of 10 to 20 $\mu$m (Tisno D supplied by Otsuka Kagaku Yakuhin; hereinafter referred to as "potassium titanate").

Comparative Example 5

A thermoplastic composition was prepared in the same manner as described in Example 35 except that MAH was not added at the second step and AEA was not added at the third step.

Examples 42 through 46

Thermoplastic elastomer compositions were prepared in the same manner as described in Example 35 except that the amounts incorporated of MAH, AEA, DVB and peroxide (A) were changed.

Example 47

A thermoplastic elastomer composition was prepared in the same manner as described in Example 35 except that the filler was not added at the first step.

Example 48

A composition comprising 50 parts by weight of a pelletized ethylene/propylene/5-ethylidene-2-norbornene copolymer rubber [ethylene content = 78 mole%, iodine value of 10, Mooney viscosity $ML_{1+4}$ - (100°C) = 160, amount of extended oil = 30 parts by weight (accordingly, the amount of the oil component was 15 parts by weight); hereinafter referred to as "EPDM (3)"], 50 parts by weight of PP, 0.5 part by weight of MAH, 0.5 part by weight of DVB and 0.3 part by weight of 2,5-dimethyl-2,5-(tert-butylperoxy)hexine-3 (hereinafter referred to as "peroxide (B)") was stirred and mixed by a Henschel mixer. The mixture was extruded in a nitrogen atmosphere at 230°C by a twin-screw extruder supplied by Werner and Pfleiderer (L/D = 43, intermeshing type, rotation in the same direction, three-thread type screw) (first step).

Then, 100 parts by weight of the square pellet of the above composition was stirred with 1.0 part by weight of AEA by a Henschel mixer to prepare a blend, and the blend was extruded at 230°C in a nitrogen atmosphere by a twin-screw extruder (second step).

Then, 100 parts by height of the above pellet was kneaded with 5 parts by weight of the milled glass fiber in a nitrogen atmosphere at 200°C for 5 minutes by a Banbury mixer, and the kneaded mixture was passed through rolls and formed into a square pellet by a sheet cutter (third step).

Examples 49 through 54

The procedures of Example 48 were repeated in the same manner except that the kind and amount of the filler were changed as shown in Table 5 at the third step.

Examples 55 through 59

Thermoplastic elastomer compositions were prepared in the same manner as described in Example 48 except that the amounts of MAH, AEA, DVB and peroxide (B) were changed.

Comparative Example 6

The procedures of Example 48 were repeated in the same manner except that MAH was not added at the first step and AEA was not added at the second step.

Example 60

The procedures of Example 48 were repeated in the same manner except that the filler was not added at the third step.

The physical properties of the compositions obtained in Examples 48 through 60 and Comparative Example 6 are shown in Table 5.

Example 61

A mixture was prepared by stirring 70 parts by weight of EPDM (3), 30 parts by weight of PP, 0.5 part by weight of MAH, 0.5 part by weight of DVB and 0.3 part by weight of peroxide (B) by a Henschel mixer, and the mixture was extruded at 220°C in a nitrogen atmosphere by a twin-screw extruder (first step).

Then, 100 parts by weight of the obtained square pellet of the above composition was kneaded with 5 parts by weight of the milled glass fiber at 200°C for 5 minutes in a nitrogen atmosphere by a Banbury mixer, and the mixture was passed through rolls and a square pellet was formed by a sheet cutter (second step).

Then, 100 parts by weight of the obtained square pellet of the above composition was stirred with 1.0 part by weight of AEA by a Henschel mixer, and the formed blend was extruded at 230°C in a nitrogen atmosphere by a twin-screw extruder (third step).

Examples 62 through 67

The procedures of Example 61 were repeated in the same manner except that the kind and amount of the filler were changed as shown in Table 6 at the third step.

Examples 68 through 72

The procedures of Example 61 were repeated in the same manner except that the amount incorporated of MAH, AEA, DVB and peroxide (B) were changed.

Comparative Example 7

The procedures of Example 61 were repeated in the same manner except that MAH was not added at the first step and AEA was not added at the second step.

Example 73

The procedures of Example 61 were repeated in the same manner except that the filler was not added at the third step.

The physical properties of the compositions obtained in Examples 61 through 73 and Comparative Example 7 are shown in Table 6.

Table 1

| Composition | | E1 | E2 | E3 | E4 | E5 | E6 | E7 | E8 | R1 | E9 | E10 | E11 | E12 | R2 |
|---|---|---|---|---|---|---|---|---|---|---|---|---|---|---|---|
| first step | EPDM (1) | 70 | 70 | 70 | 70 | 70 | 70 | 70 | 70 | 70 | 30 | 30 | 30 | 30 | 30 |
| | PP | 30 | 30 | 30 | 30 | 30 | 30 | 30 | 30 | 30 | 70 | 70 | 70 | 70 | 70 |
| | MAH | 0.5 | 0.3 | 1.0 | 2.0 | 3.0 | 0.5 | 0.5 | 0.5 | – | 0.5 | 0.5 | 0.5 | 0.5 | – |
| | DVB | 0.5 | 0.4 | 0.7 | 0.8 | 0.9 | 0.5 | 0.5 | 0.5 | 0.5 | 0.5 | 0.5 | 0.5 | 0.5 | 0.5 |
| | peroxide(A) | 0.3 | 0.2 | 0.5 | 0.6 | 0.7 | 0.3 | 0.3 | 0.3 | 0.3 | 0.3 | 0.3 | 0.3 | 0.3 | 0.3 |
| second step | AEA | 1.0 | 0.6 | 1.5 | 3.0 | 4.5 | – | – | – | – | 1.0 | – | – | – | – |
| | DET | – | – | – | – | – | 1.0 | – | – | – | – | 1.0 | – | – | – |
| | TET | – | – | – | – | – | – | 1.0 | – | – | – | – | 1.0 | – | – |
| | AE | – | – | – | – | – | – | – | 1.0 | – | – | – | – | 1.0 | – |
| **Basic physical Properties** | | | | | | | | | | | | | | | |
| $M_{100}$ (kgf/cm$^2$) | | 45 | 43 | 45 | 45 | 42 | 42 | 43 | 43 | 41 | 115 | 116 | 116 | 115 | 117 |
| $T_B$ (kgf/cm$^2$) | | 100 | 99 | 105 | 107 | 101 | 103 | 101 | 102 | 99 | 219 | 220 | 223 | 225 | 230 |
| $E_B$ (%) | | 580 | 583 | 587 | 588 | 581 | 579 | 588 | 575 | 577 | 640 | 642 | 645 | 645 | 637 |
| $H_s$ JIS A | | 82 | 81 | 81 | 82 | 80 | 82 | 81 | 80 | 81 | – | – | – | – | – |
| Shore D hardness | | – | – | – | – | – | – | – | – | – | 53 | 54 | 54 | 54 | 54 |
| $P_s$ (%) | | 19 | 19 | 18 | 20 | 21 | 20 | 19 | 19 | 20 | – | – | – | – | – |
| FM (kgf/cm$^2$) | | – | – | – | – | – | – | – | – | – | 6200 | 6200 | 6200 | 6200 | 6200 |
| SP (°C) | | 138 | 139 | 138 | 140 | 139 | 138 | 138 | 137 | 137 | 150 | 151 | 150 | 149 | 151 |
| Gel content | | 96 | 95 | 97 | 97 | 97 | 96 | 96 | 97 | 96 | 47 | 47 | 46 | 47 | 48 |
| **Bonding Strength** | | | | | | | | | | | | | | | |
| peeling strength to urethane (g/cm) | | 950 | 900 | 1000 | 1020 | 990 | 900 | 910 | 900 | below 0.1 | 955 | 910 | 925 | 910 | below 0.1 |
| bonding strength to nylon (kg/cm) | | 8.0 | 7.0 | 8.5 | * | * | 7.9 | 8.0 | 8.1 | below 0.1 | 8.5 | 8.2 | 8.2 | 8.1 | below 0.1 |
| bonding strength to poly-urethane (kg/cm) | | 1.3 | 1.1 | 1.2 | 1.3 | 1.1 | 1.2 | 1.2 | 1.1 | below 0.1 | 1.3 | 1.2 | 1.2 | 1.3 | below 0.1 |
| bonding strength to steel sheet (kg/cm) | | 8.3 | 8.1 | 8.3 | * | * | 8.1 | 8.1 | 8.0 | below 0.1 | 8.0 | 8.1 | 8.3 | 8.1 | below 0.1 |

E: Example          R: Comparative Example          * : breaking of substrate

Table 2

| Composition | | E13 | E14 | E15 | E16 | E17 | R3 |
|---|---|---|---|---|---|---|---|
| first step | EPDM (2) | 70*1 | 70*1 | 70*1 | 70*1 | 70*1 | 70*1 |
| | PP | 50 | 50 | 50 | 50 | 50 | 50 |
| | MAH | 0.5 | 0.3 | 1.0 | 2.0 | 3.0 | - |
| | DVB | 0.5 | 0.4 | 0.7 | 0.8 | 0.9 | 0.5 |
| | peroxide(A) | 0.3 | 0.4 | 0.7 | 0.8 | 0.9 | 0.3 |
| second step | AEA | 1.0 | 0.5 | 1.5 | 3.0 | 4.5 | - |

| Basic physical Properties | | | | | | |
|---|---|---|---|---|---|---|
| $M_{100}$ (kgf/cm$^2$) | 71 | 70 | 72 | 72 | 71 | 71 |
| $T_B$ (kgf/cm$^2$) | 153 | 152 | 154 | 155 | 152 | 151 |
| $E_B$ (%) | 630 | 620 | 630 | 635 | 630 | 635 |
| $H_B$ JIS A | - | - | - | - | - | - |
| Shore D hardness | 38 | 37 | 38 | 38 | 38 | 37 |
| $P_B$ (%) | - | - | - | - | - | - |
| FM (kgf/cm$^2$) | 2500 | 2500 | 2600 | 2600 | 2600 | 2500 |
| SP (°C) | 146 | 145 | 147 | 147 | 147 | 146 |
| Gel content | 62 | 61 | 62 | 60 | 61 | 62 |

| Bonding Strength | | | | | | |
|---|---|---|---|---|---|---|
| peeling strength to urethane (g/cm) | 940 | 920 | 990 | 990 | 990 | below 0.1 |
| bonding strength to nylon (kg/cm) | 8.0 | 7.8 | 8.1 | 8.1 | 8.2 | below 0.1 |
| bonding strength to poly-urethane (kg/cm) | 1.2 | 1.1 | 1.2 | 1.2 | 1.2 | below 0.1 |
| bonding strength to steel sheet (kg/cm) | 8.1 | 8.0 | 8.1 | 8.1 | 8.2 | below 0.1 |

*1: extended oil amount was 20 parts by weight and the amount of EPDM was 50 parts by weight.

## Table 3

| Composition | | E18 | E19 | E20 | E21 | E22 | E23 | E24 | E25 | R4 | E26 | E27 | E28 | E29 |
|---|---|---|---|---|---|---|---|---|---|---|---|---|---|---|
| first step | EPDM (1) | 70 | 70 | 70 | 70 | 70 | 70 | 70 | 70 | 70 | 70 | 70 | 70 | 50 |
| | PP | 30 | 30 | 30 | 30 | 30 | 30 | 30 | 30 | 30 | 30 | 30 | 30 | 50 |
| | IIR | 10 | 10 | 10 | 10 | 10 | 10 | 10 | 10 | 10 | 10*2 | 10 | - | 30 |
| | oil | 30 | 30 | 30 | 30 | 30 | 30 | 30 | 30 | 30 | 30 | - | 30 | 10 |
| | MAH | 0.5 | 0.3 | 1.0 | 2.0 | 3.0 | 0.5 | 0.5 | 0.5 | - | 0.5 | 0.5 | 0.5 | 0.5 |
| | DVB | 0.5 | 0.4 | 0.7 | 0.8 | 0.9 | 0.5 | 0.5 | 0.5 | 0.5 | 0.5 | 0.5 | 0.5 | 0.5 |
| | peroxide(A) | 0.3 | 0.2 | 0.5 | 0.6 | 0.7 | 0.3 | 0.3 | 0.3 | 0.3 | 0.3 | 0.3 | 0.3 | 0.3 |
| second step | AEA | 1.0 | 0.6 | 1.5 | 3.0 | 4.5 | - | - | - | - | 1.0 | 1.0 | 1.0 | 1.0 |
| | DET | - | - | - | - | - | 1.0 | - | - | - | - | - | - | - |
| | TET | - | - | - | - | - | - | 1.0 | - | - | - | - | - | - |
| | AE | - | - | - | - | - | - | - | 1.0 | - | - | - | - | - |
| Basic physical Properties | | | | | | | | | | | | | | |
| $M_{100}$ (kgf/cm$^2$) | | 26 | 26 | 27 | 27 | 27 | 26 | 25 | 26 | 25 | 23 | 35 | 32 | 55 |
| $T_B$ (kgf/cm$^2$) | | 80 | 81 | 82 | 81 | 81 | 80 | 80 | 79 | 78 | 80 | 99 | 91 | 135 |
| $E_B$ (%) | | 630 | 620 | 620 | 600 | 600 | 610 | 600 | 610 | 600 | 620 | 540 | 590 | 560 |
| $H_S$ JIS A | | 65 | 64 | 64 | 65 | 64 | 65 | 65 | 65 | 64 | 65 | 77 | 71 | 82 |
| $P_S$ (%) | | 9 | 8 | 9 | 10 | 10 | 9 | 9 | 9 | 11 | 9 | 15 | 12 | 26 |
| SP (°C) | | 120 | 121 | 120 | 119 | 120 | 119 | 120 | 120 | 120 | 121 | 130 | 127 | 136 |
| Gelcontent | | 96 | 96 | 97 | 96 | 96 | 96 | 96 | 96 | 93 | 96 | 96 | 97 | 94 |
| Bonding Strength | | | | | | | | | | | | | | |
| peeling strength to urethane strength (g/cm) | | 940 | 930 | 945 | 950 | 950 | 900 | 910 | 900 | below 0.1 | 930 | 930 | 920 | 925 |
| bonding strength to nylon (kg/cm) | | 7.5 | 7.1 | 7.3 | * | * | 7.2 | 7.1 | 7.2 | below 0.1 | 7.4 | 7.3 | 7.4 | * |
| bonding strength to polyurethane (kg/cm) | | 1.4 | 1.4 | 1.4 | 1.5 | 1.6 | 1.5 | 1.4 | 1.4 | below 0.1 | 1.4 | 1.1 | 1.1 | 1.2 |
| bonding to steel sheet (kg/cm) | | 7.6 | 7.5 | 7.7 | * | * | 7.6 | 7.6 | 7.5 | below 0.1 | 7.6 | 7.4 | 7.1 | * |

*2: PIB (polyisobutylene) was used.   *: breaking of substrate

Table 3 (continued)

| Composition | | E30 | E31 | E32 | E33 | E34 |
|---|---|---|---|---|---|---|
| first step | EPDM (1) | 50 | 50 | 50 | 50 | 50 |
| | PP | 50 | 50 | 50 | 50 | 50 |
| | IIR | 50 | 50 | 10 | 10 | 10 |
| | oil | 10 | 80 | 10 | 50 | 70 |
| | MAH | 0.5 | 0.5 | 0.5 | 0.5 | 0.5 |
| | DVB | 0.5 | 0.5 | 0.5 | 0.5 | 0.5 |
| | peroxide(A) | 0.3 | 0.3 | 0.3 | 0.3 | 0.3 |
| second step | AEA | 1.0 | 1.0 | 1.0 | 1.0 | 1.0 |
| | DET | - | - | - | - | - |
| | TET | - | - | - | - | - |
| | AE | - | - | - | - | - |
| Basic physical Properties | | | | | | |
| $M_{100}$ (kgf/cm$^2$) | | 24 | 22 | 62 | 25 | 21 |
| $T_B$ (kgf/cm$^2$) | | 73 | 70 | 140 | 76 | 69 |
| $E_B$ (%) | | 645 | 650 | 610 | 650 | 660 |
| $H_s$ JIS A | | 65 | 61 | 83 | 65 | 79 |
| $P_s$ (%) | | 13 | 13 | 22 | 12 | 11 |
| SP (°C) | | 115 | 114 | 116 | 115 | 115 |
| Gelcontent | | 96 | 95 | 94 | 94 | 91 |
| Bonding Strength | | | | | | |
| peeling strength to urethane strength (g/cm) | | 930 | 920 | 910 | 910 | 930 |
| bonding strength to nylon (kg/cm) | | * | 7.1 | * | * | * |
| bonding strength to poly-urethane (kg/cm) | | 1.1 | 1.3 | 1.1 | 1.1 | 1.4 |
| bonding to steel sheet (kg/cm) | | * | 7.5 | 7.1 | * | * |

*2: PIB (polyisobutylene) was used.          *: breaking of substrate

Table 4

| | E35 | E36 | E37 | E38 | E39 | E40 | E41 | R5 | E42 | E43 | E44 | E45 | E46 | E47 |
|---|---|---|---|---|---|---|---|---|---|---|---|---|---|---|
| **Composition** | | | | | | | | | | | | | | |
| first step | | | | | | | | | | | | | | |
| EPDM (1) | 20 | 20 | 20 | 20 | 20 | 20 | 20 | 20 | 20 | 20 | 20 | 20 | 20 | 20 |
| PP | 60 | 60 | 60 | 60 | 60 | 60 | 60 | 60 | 60 | 60 | 60 | 60 | 60 | 60 |
| oil | 10 | 10 | 10 | 10 | 10 | 10 | 10 | 10 | 10 | 10 | 10 | 10 | 10 | 10 |
| IIR | 10 | 10 | 10 | 10 | 10 | 10 | 10 | 10 | 10 | 10 | 10 | 10 | 10 | 10 |
| milled glass fiber | 5 | 15 | 25 | – | – | – | – | 5 | 5 | 5 | 5 | 5 | 5 | – |
| glass flake | – | – | – | 15 | – | – | – | – | – | – | – | – | – | – |
| potassium titanate fiber | – | – | – | – | 5 | 15 | 25 | – | – | – | – | – | – | – |
| second step | | | | | | | | | | | | | | |
| elastomer obtained at first step | 100 | 100 | 100 | 100 | 100 | 100 | 100 | 100 | 100 | 100 | 100 | 100 | 100 | 100 |
| MAH | 0.5 | 0.5 | 0.5 | 0.5 | 0.5 | 0.5 | 0.5 | – | 0.3 | 1.0 | 2.0 | 3.0 | 1.0 | 0.5 |
| DVB | 0.5 | 0.5 | 0.5 | 0.5 | 0.5 | 0.5 | 0.5 | 0.5 | 0.4 | 0.7 | 0.8 | 0.9 | 0.7 | 0.5 |
| peroxide(A) | 0.3 | 0.3 | 0.3 | 0.3 | 0.3 | 0.3 | 0.3 | 0.3 | 0.2 | 0.5 | 0.6 | 0.7 | 0.5 | 0.3 |
| third step | | | | | | | | | | | | | | |
| AEA | 1.0 | 1.0 | 1.0 | 1.0 | 1.0 | 1.0 | 1.0 | – | 0.6 | 1.5 | 3.0 | 4.5 | 0.5 | 1.0 |
| **Basic Physical Properties** | | | | | | | | | | | | | | |
| M$_{100}$ (kgf/cm$^2$) | 115 | 145 | 190 | 120 | 115 | 137 | 172 | 118 | 115 | 119 | 119 | 123 | 121 | 105 |
| T$_B$ (kgf/cm$^2$) | 205 | 249 | 278 | 221 | 210 | 240 | 263 | 205 | 204 | 207 | 207 | 209 | 205 | 190 |
| E$_B$ (%) | 620 | 540 | 510 | 507 | 610 | 550 | 515 | 620 | 620 | 618 | 625 | 627 | 618 | 630 |
| H$_s$ shore D hardness | 50 | 53 | 57 | 51 | 50 | 51 | 55 | 50 | 51 | 51 | 52 | 51 | 50 | 50 |
| gel content | 47 | 47 | 46 | 47 | 47 | 46 | 47 | 47 | 46 | 47 | 47 | 48 | 46 | 47 |
| **Peeling Strength to Urethane Coating (g/cm)** | 850 | 840 | 810 | 840 | 860 | 835 | 800 | below 0.1 | 840 | 855 | 877 | 940 | 860 | 860 |
| **Other Physical Properties** | | | | | | | | | | | | | | |
| heat resistance: heat sag (120°C)(mm) | 5 | 3 | 2 | 6 | 5 | 3 | 2 | 9 | 5 | 5 | 5 | 5 | 6 | 12 |
| cold resistance: Izod impact strength (-20°C)(kg·cm/cm) | NB | NB | NB | NB | NB | NB | NB | NB | NB | NB | NB | NB | NB | NB |
| shape stability: initial flexural strength (kgf/cm$^2$) | 4500 | 5100 | 5500 | 4800 | 4600 | 5000 | 5400 | 4400 | 4500 | 4500 | 4500 | 4500 | 4700 | 4100 |
| dimension stability: linear expansion coefficient (x10$^{-6}$)(mm/mm/°C) | 100 | 80 | 60 | 100 | 110 | 70 | 60 | 130 | 100 | 100 | 100 | 100 | 90 | 160 |

NB: not broken

EP 0 336 780 B1

Table 5

| Composition | E48 | E49 | E50 | E51 | E52 | E53 | E54 | E55 | E56 | E57 | E58 | E59 | R6 | E60 |
|---|---|---|---|---|---|---|---|---|---|---|---|---|---|---|
| **first step** | | | | | | | | | | | | | | |
| EPDM (3) | 50 | 50 | 50 | 50 | 50 | 50 | 50 | 50 | 50 | 50 | 50 | 50 | 50 | 50 |
| PP | 50 | 50 | 50 | 50 | 50 | 50 | 50 | 50 | 50 | 50 | 50 | 50 | 50 | 50 |
| MAH | 0.5 | 0.5 | 0.5 | 0.5 | 0.5 | 0.5 | 0.5 | 0.3 | 1.0 | 2.0 | 3.0 | 1.0 | – | 0.5 |
| DVB | 0.5 | 0.5 | 0.5 | 0.5 | 0.5 | 0.5 | 0.5 | 0.4 | 0.7 | 0.8 | 0.9 | 0.7 | 0.5 | 0.5 |
| peroxide(B) | 0.3 | 0.3 | 0.3 | 0.3 | 0.3 | 0.3 | 0.3 | 0.2 | 0.5 | 0.6 | 0.7 | 0.5 | 0.3 | 0.3 |
| **second step** | | | | | | | | | | | | | | |
| AEA | 1.0 | 1.0 | 1.0 | 1.0 | 1.0 | 1.0 | 1.0 | 0.6 | 1.5 | 3.0 | 4.5 | 0.5 | – | 1.0 |
| **third step** | | | | | | | | | | | | | | |
| elastomer obtained at second step | 100 | 100 | 100 | 100 | 100 | 100 | 100 | 100 | 100 | 100 | 100 | 100 | 100 | 100 |
| milled glass fiber | 5 | 10 | 15 | – | – | – | – | 5 | 5 | 5 | 5 | 5 | 5 | – |
| glass flake | – | – | – | 10 | – | – | – | – | – | – | – | – | – | – |
| porassium titanate fiber | – | – | – | – | 10 | 20 | 30 | – | – | – | – | – | – | – |
| **Basic Physical Properties** | | | | | | | | | | | | | | |
| M $_{100}$ (kgf/cm$^2$) | 87 | 97 | 105 | 85 | 90 | 108 | 135 | 87 | 88 | 85 | 86 | 87 | 95 | 80 |
| T $_B$ (kgf/cm$^2$) | 175 | 186 | 212 | 172 | 185 | 225 | 260 | 174 | 177 | 176 | 175 | 172 | 110 | 170 |
| E $_B$ (%) | 560 | 510 | 490 | 490 | 510 | 470 | 425 | 565 | 560 | 575 | 568 | 560 | 210 | 590 |
| H $_S$ shore D hardness | 43 | 44 | 47 | 44 | 43 | 46 | 47 | 44 | 43 | 44 | 44 | 43 | 43 | 44 |
| gel content | 56 | 55 | 56 | 56 | 55 | 56 | 56 | 55 | 56 | 56 | 56 | 56 | 55 | 55 |
| **Peeling Strength to Urethane Coating (g/cm)** | 890 | 870 | 830 | 875 | 895 | 890 | 820 | 860 | 900 | 910 | 950 | 990 | below 0.1 | 950 |
| **Other Physical Properties** | | | | | | | | | | | | | | |
| heat resistance: heat sag (120°C)(mm) | 5 | 4 | 3 | 7 | 5 | 2 | 2 | 5 | 5 | 5 | 5 | 5 | 10 | 10 |
| cold resistance: Izod impact strength (-20°C)(kg·cm/cm) | NB | NB | NB | NB | NB | NB | NB | NB | NB | NB | NB | NB | NB | NB |
| shape stability: initial flexural strength (kgf/cm$^2$) | 3500 | 3900 | 4200 | 3500 | 3700 | 4400 | 5300 | 3600 | 3500 | 3600 | 3600 | 3700 | 3800 | 3200 |
| dimension stability: linear expansion coefficient (x10$^{-4}$)(mm/mm/°C) | 110 | 90 | 70 | 100 | 90 | 70 | 60 | 110 | 110 | 110 | 110 | 110 | 120 | 160 |

NB: not broken

EP 0 336 780 B1

Table 6

| Composition | E61 | E62 | E63 | E64 | E65 | E66 | E67 | R7 | E68 | E69 | E70 | E71 | E72 | E73 |
|---|---|---|---|---|---|---|---|---|---|---|---|---|---|---|
| **first step** | | | | | | | | | | | | | | |
| EPDM (3) | 70 | 70 | 70 | 70 | 70 | 70 | 70 | 70 | 70 | 70 | 70 | 70 | 70 | 70 |
| PP | 30 | 30 | 30 | 30 | 30 | 30 | 30 | 30 | 30 | 30 | 30 | 30 | 30 | 30 |
| MAH | 0.5 | 0.5 | 0.5 | 0.5 | 0.5 | 0.5 | 0.5 | – | 0.3 | 1.0 | 2.0 | 3.0 | 1.0 | 0.5 |
| DVB | 0.5 | 0.5 | 0.5 | 0.5 | 0.5 | 0.5 | 0.5 | 0.5 | 0.4 | 0.7 | 0.8 | 0.9 | 0.7 | 0.5 |
| peroxide(B) | 0.3 | 0.3 | 0.3 | 0.3 | 0.3 | 0.3 | 0.3 | 0.3 | 0.2 | 0.5 | 0.6 | 0.7 | 0.5 | 0.3 |
| **second step** | | | | | | | | | | | | | | |
| milled glass fiber | 5 | 10 | 15 | – | – | – | – | 5 | 5 | 5 | 5 | 5 | 5 | – |
| glass flake | – | – | – | 10 | – | – | – | – | – | – | – | – | – | – |
| potassium titanate fiber | – | – | – | – | 10 | 20 | 30 | – | – | – | – | – | – | – |
| **third step** | | | | | | | | | | | | | | |
| elastomer obtained at second step | 100 | 100 | 100 | 100 | 100 | 100 | 100 | 100 | 100 | 100 | 100 | 100 | 100 | 100 |
| AEA | 1.0 | 1.0 | 1.0 | 1.0 | 1.0 | 1.0 | 1.0 | – | 0.6 | 1.5 | 3.0 | 4.5 | 0.5 | 1.0 |
| **Basic Physical Properties** | | | | | | | | | | | | | | |
| M100 (kgf/cm²) | 69 | 78 | 99 | 70 | 75 | 93 | 120 | 60 | 67 | 68 | 68 | 68 | 69 | 65 |
| $T_B$ (kgf/cm²) | 139 | 157 | 197 | 140 | 147 | 192 | 223 | 125 | 139 | 142 | 142 | 141 | 140 | 130 |
| $E_B$ (%) | 530 | 485 | 430 | 455 | 510 | 460 | 400 | 583 | 525 | 536 | 535 | 537 | 535 | 550 |
| $H_S$ shore D hardness | 38 | 39 | 42 | 37 | 38 | 41 | 45 | 36 | 38 | 39 | 38 | 38 | 38 | 38 |
| gel content | 78 | 78 | 79 | 79 | 78 | 78 | 77 | 78 | 78 | 78 | 78 | 78 | 78 | 77 |
| Peeling Strength to Urethane Coating (g/cm) | 890 | 875 | 870 | 850 | 870 | 860 | 835 | below 0.1 | 880 | 880 | 870 | 840 | 900 | 890 |
| **Other Physical Properties** | | | | | | | | | | | | | | |
| heat resistance: heat sag (120°C)(mm) | 11 | 8 | 5 | 9 | 8 | 4 | 3 | 16 | 10 | 10 | 10 | 10 | 10 | 15 |
| cold resistance: Izod impact strength (-20°C)(kg·cm/cm) | NB | NB | NB | NB | NB | NB | NB | NB | NB | NB | NB | NB | NB | NB |
| shape stability: initial flexural strength (kgf/cm²) | 2500 | 2800 | 3700 | 2400 | 2700 | 3600 | 4400 | 2100 | 2600 | 2600 | 2600 | 2500 | 2600 | 2200 |
| dimension stability: linear expansion coefficient (x10⁻⁶)(mm/mm/°C) | 100 | 80 | 60 | 100 | 80 | 60 | 50 | 160 | 100 | 100 | 100 | 100 | 90 | 160 |

NB: not broken

Example 74

A composition comprising 50 parts by weight of a pelletized ethylene/propylene copolymer (ethylene content = 80 mole%; hereinafter referred to "EPR"), 50 parts by weight of PP, 0.5 part by weight of MAH, 0.12 part by weight of DVB and 0.06 part by weight of peroxide (A) was stirred by a Henschel mixer, and the mixture was extruded at 220°C in a nitrogen atmosphere by a twin-screw extruder to prepare a thermoplastic elastomer composition.

Then, the obtained square pellet of the composition was stirred with 1.0 part by weight of AE by a Henschel mixer, and the mixture was extruded at 220°C in a nitrogen atmosphere by a twin-screw extruder to prepare a thermoplastic elastomer composition.

Example 75

A thermoplastic elastomer composition was prepared in the same manner as described in Example 74 except that 70 parts by weight of EPDM (2) was used instead of EPR.

The results obtained in Examples 74 and 75 are shown in Table 7.

Table 7

| Composition | | E74 | E75 |
|---|---|---|---|
| first step | EPR | 50 | - |
| | EPDM (2) | - | 50 |
| | PP | 50 | 50 |
| | MAH | 1.0 | 1.0 |
| | DVB | 0.12 | 0.12 |
| | peroxide(A) | 0.06 | 0.06 |
| second step | AEA | 1.0 | 1.0 |
| Basic Physical Properties | | | |
| $M_{100}$ (kgf/cm$^2$) | | 50 | 51 |
| $T_B$ (kgf/cm$^2$) | | 120 | 115 |
| $E_B$ (%) | | 345 | 378 |
| $H_S$ Shore D hardness | | 36 | 40 |
| FM (kgf/cm$^2$) | | 2000 | 2500 |
| Gel content | | 1.7 | 2.0 |
| Bonding Strength | | | |
| peeling strength to urethane coating (g/cm) | | 920 | 915 |
| bonding strength to nylon (kg/cm) | | 7.2 | 7.4 |
| bonding strength to polyurethane (kg/cm) | | 1.4 | 1.5 |
| bonding strength to steel sheet (kg/cm) | | 6.2 | 6.1 |

Example 76

A composition comprising 50 parts by weight of EPDM (3), 50 parts by weight of PP, 0.5 part by weight of MAH, 0.5 part by weight of DVB, 0.3 part by weight of peroxide (B) and 1.0 part by weight of AEA was stirred by a Henschel mixer, and the mixture was extruded at 220°C in a nitrogen atmosphere by a twin-screw extruder to prepare a thermoplastic elastomer composition.

The physical properties, coating peeling strength and bonding strength were measured. The obtained results as well as results obtained in subsequent Examples 77 through 81 are shown in Table 8.

Examples 77 through 81

Thermoplastic elastomers were prepared in the same manner as described in Example 76 except that the amounts incorporated of MAH, AEA, DVB and peroxide (B) were changed.

EP 0 336 780 B1

Table 8

| Composition | E76 | E77 | E78 | E79 | E80 | E81 |
|---|---|---|---|---|---|---|
| EPDM (3) | 50 | 50 | 50 | 50 | 50 | 50 |
| PP | 50 | 50 | 50 | 50 | 50 | 50 |
| MAH | 0.5 | 0.3 | 1.0 | 2.0 | 3.0 | 1.0 |
| DVB | 0.5 | 0.4 | 0.7 | 0.8 | 0.9 | 0.7 |
| peroxide(B) | 0.3 | 0.2 | 0.5 | 0.6 | 0.7 | 0.5 |
| AEA | 1.0 | 0.6 | 1.5 | 3.0 | 4.5 | 0.5 |
| Basic Physical Properties | | | | | | |
| $M_{100}$ (kgf/cm$^2$) | 85 | 84 | 87 | 87 | 87 | 85 |
| $T_B$ (kgf/cm$^2$) | 180 | 175 | 182 | 182 | 187 | 178 |
| $E_B$ (%) | 610 | 600 | 620 | 620 | 620 | 620 |
| $H_S$ Shore D hardness | 45 | 46 | 46 | 47 | 46 | 43 |
| FM (kgf/cm$^2$) | 3200 | 3200 | 3300 | 3300 | 3300 | 3200 |
| SP (°C) | 140 | 139 | 140 | 140 | 140 | 141 |
| gel content | 56 | 56 | 57 | 57 | 57 | 53 |
| Bonding Strength | | | | | | |
| peeling strength to urethane coating (g/cm) | 890 | 870 | 890 | 950 | 990 | 860 |
| bonding strength to nylon (kg/cm) | 7.9 | 7.9 | 8.1 | * | * | 8.0 |
| bonding strength to polyurethane (kg/cm) | 1.1 | 1.0 | 1.1 | 1.2 | 1.2 | 0.9 |
| bonding strength to steel sheet (kg/cm) | 8.0 | 8.0 | 8.1 | * | * | 8.1 |

*: breaking of substrate

## Example 82

A composition comprising 70 parts by weight of EPDM (3), 30 parts by weight of PP, 10 parts by weight of IIR, 30 parts by weight of the oil, 0.5 part by weight of MAH, 0.5 part by weight of DVB, 0.3 part by weight of peroxide (B) and 1.0 part by weight of AEA was stirred by a Henschel mixer, and the mixture was extruded at 220°C in a nitrogen atmosphere by a twin-screw extruder to form a thermoplastic elastomer composition.

## Examples 83 through 87

Thermoplastic elastomers were prepared in the same manner as described in Example 82 except that the amounts incorporated of MAH, AEA, DVB and peroxide (B) were changed.

The physical properties of the compositions obtained in Examples 82 through 87 are shown in Table 9.

24

Table 9

| Composition | E82 | E83 | E84 | E85 | E86 | E87 |
|---|---|---|---|---|---|---|
| EPDM (3) | 70 | 70 | 70 | 70 | 70 | 70 |
| PP | 30 | 30 | 30 | 30 | 30 | 30 |
| IIR | 10 | 10 | 10 | 10 | 10 | 10 |
| oil | 30 | 30 | 30 | 30 | 30 | 30 |
| MAH | 0.5 | 0.3 | 1.0 | 2.0 | 3.0 | 1.0 |
| DVB | 0.5 | 0.4 | 0.7 | 0.8 | 0.9 | 0.7 |
| peroxide(B) | 0.3 | 0.2 | 0.5 | 0.6 | 0.7 | 0.5 |
| AEA | 1.0 | 0.6 | 1.5 | 3.0 | 4.5 | 0.5 |
| Basic Physical Properties | | | | | | |
| $M_{100}$ (kgf/cm$^2$) | 30 | 29 | 31 | 31 | 32 | 32 |
| $T_B$ (kgf/cm$^2$) | 90 | 90 | 92 | 93 | 92 | 90 |
| $E_B$ (%) | 625 | 620 | 621 | 621 | 620 | 620 |
| $H_S$ JIS A | 65 | 66 | 66 | 66 | 66 | 65 |
| $P_S$ (%) | 9 | 9 | 10 | 10 | 10 | 9 |
| SP (°C) | 120 | 121 | 120 | 120 | 120 | 120 |
| gel content | 96 | 96 | 96 | 96 | 96 | 97 |
| Bonding Strength | | | | | | |
| peeling strength to urethane coating (g/cm) | 890 | 880 | 895 | 910 | 970 | 850 |
| bonding strength to nylon (kg/cm) | 8.0 | 7.9 | 7.9 | 8.1 | 8.0 | 8.0 |
| bonding strength to polyurethane (kg/cm) | 1.2 | 1.1 | 1.2 | 1.1 | 1.1 | 1.1 |
| bonding strength to steel sheet (kg/cm) | 8.1 | 8.0 | 8.0 | 8.0 | 7.9 | 8.1 |

Example 88

A composition comprising 50 parts by weight of EPDM (3), 50 parts by weight of PP, 0.5 part by weight of MAH, 0.5 part by weight of DVB, 0.3 part by weight of peroxide (B) and 1.0 part by weight of AEA was stirred by a Henschel mixer, and the mixture was extruded at 220°C in a nitrogen atmosphere by a twin-screw extruder to form a thermoplastic elastomer (first step).

Then, 100 parts by weight of the obtained square pellet of the above composition was kneaded with 10 parts by weight of a potassium titanate fiber by a Banbury mixer at 200°C for 5 minutes in a nitrogen atmosphere, and the kneaded mixture was passed through rolls and formed into a square pellet by a sheet cutter (second step).

Comparative Example 8

The procedures of Example 88 were repeated in the same manner except that MAH and AEA were not added at the first step.

Example 89

A thermoplastic elastomer was prepared in the same manner as described in Example 88 except that the amounts incorporated of MAH, AEA, DVB and peroxide (B) were changed.

The results obtained in Examples 88 and 89 and Comparative Example 8 are shown in Table 10.

Table 10

| Composition | E88 | R8 | E89 |
|---|---|---|---|
| EPDM (3) | 50 | 50 | 50 |
| PP | 50 | 50 | 50 |
| MAH | 0.5 | - | 1.0 |
| DVB | 0.5 | 0.5 | 0.7 |
| peroxide(B) | 0.3 | 0.3 | 0.5 |
| AEA | 1.0 | - | 0.5 |
| potassium titanate fiber | 10 | 10 | 10 |
| Basic Physical Properties | | | |
| $M_{100}$ (kgf/cm$^2$) | 90 | 95 | 92 |
| $T_B$ (kgf/cm$^2$) | 190 | 110 | 200 |
| $E_B$ (%) | 495 | 250 | 480 |
| $H_S$ Shore D hardness | 43 | 43 | 45 |
| gel content | 55 | 55 | 56 |
| Peeling Strength to Urethane Coating (g/cm) | 880 | below 0.1 | 850 |
| Other Physical Properties | | | |
| heat resistance: heat sag (120°C)(mm) | 5 | 11 | 5 |
| cold resistance: Izod impact strength (-20°C) (kg•cm/cm) | NB[*6] | NB[*6] | NB[*6] |
| Shape stability: initial flexural strength (kgf/cm$^2$) | 3600 | 3700 | 3700 |
| dimension stability: linear expansion coefficient (x10$^{-6}$)(mm/mm/°C) | 90 | 130 | 80 |

*6: NB = not broken

Example 90

A composition comprising 50 parts by weight of EPR, 50 parts by weight of PP, 0.5 part by weight of MAH, 0.12 part by weight of DVB, 0.06 part by weight of peroxide (B) and 1.0 part by weight of AEA was stirred by a Henschel mixer, and the mixture was extruded at 220°C in a nitrogen atmosphere by a twin-screw extruder to prepare a thermoplastic elastomer.

Example 91

A thermoplastic elastomer composition was prepared in the same manner as described in Example 90 except that 70 parts by weight of EPDM (3) was used instead of EPR.
The physical properties of the compositions obtained in Examples 90 and 91 are shown in Table 11.

26

Table 11

| Composition | E90 | E91 |
|---|---|---|
| EPR | 50 | - |
| EPDM (3) | - | 70 |
| PP | 50 | 50 |
| MAH | 0.5 | 0.5 |
| DVB | 0.12 | 0.12 |
| peroxide(B) | 0.06 | 0.06 |
| AEA | 1.0 | 1.0 |
| Basic Physical Properties | | |
| $M_{100}$ (kgf/cm$^2$) | 51 | 57 |
| $T_B$ (kgf/cm$^2$) | 127 | 125 |
| $E_B$ (%) | 340 | 370 |
| $H_S$ Shore D hardness | 36 | 41 |
| FM (kgf/cm$^2$) | 2000 | 2500 |
| gel content | 1.8 | 2.1 |
| Bonding Strength | | |
| peeling strength to urethane coating (g/cm) | 900 | 910 |
| bonding strength to nylon (kg/cm) | 7.1 | 7.0 |
| bonding strength to polyurethane (kg/cm) | 1.3 | 1.3 |
| bonding strength to steel sheet (kg/cm) | 6.2 | 6.1 |

Example 92

By a Banbury mixer, 75 parts by weight of an ethylene/propylene/ethylidene-norbornene copolymer (ethylene content = 70 mole%, iodine value = 12, Mooney viscosity $ML_{1+4}$ (100°C) = 120; hereinafter referred to as "EPDM (5)") was kneaded with 25 parts by weight of PP in a nitrogen atmosphere at 180°C for 5 minutes, and the mixture was passed through rolls and formed to a square pellet by a sheet cutter.

Then, the obtained square pellet was mixed and stirred with 0.5 part by weight of MAH, 0.5 part by weight of DVB and 0.3 part by weight of peroxide (A) by a Henschel mixer.

The mixture was extruded at 220°C in a nitrogen atmosphere by a single-screw extruder having an L/D ratio of 30 and a screw diameter of 50 mm.

The obtained square pellet was mixed with 1.0 part by weight of AEA and the mixture was extruded at 220°C in a nitrogen atmosphere by a single-screw extruder to form a thermoplastic elastomer.

The gel content and physical properties were determined according to the above-mentioned methods, and the obtained results are shown in Table 12.

Then, the thermoplastic elastomer was extruded in the form of a sheet at an extrusion temperature of 220°C and a pulling speed of 2.5 m/min by a T-die extrusion molding machine supplied by Toshiba Kikai, which had a diameter of 90 mm and comprised a coat hanger die and a full-flighted screw and in which the L/D ratio was 22. The extruded sheet-shaped thermoplastic elastomer in the molten state was passed through a pair of rolls in the state laminated with a polyurethane sheet (Thermoplastic Polyurethane P26SRNAT supplied by Nippon Polyurethane; thickness = 0.5 mm) so that the thermoplastic elastomer was contacted with the roll maintained at 60°C and the polyurethane was contacted with the roll maintained at room temperature, whereby a laminate comprising (A) a thermoplastic elastomer layer having a thickness of 1.0 mm and (B) a polyurethane layer having a thickness of 0.5 mm was obtained. The interlaminar bonding strength of the obtained laminate was measured under conditions described below. The obtained results are shown in Table 25.

Test piece:     width = 25 mm, length = 100 mm
Test method:     180° peeling
Pulling speed:     25 mm/min
Bonding strength:     value obtained by dividing the peeling load by the width of the test piece

Incidentally, the test piece where the substrate was broken is represented as "breaking of substrate" in Table 12.

Comparative Example 9

The procedures of Example 92 was repeated in the same manner except that MAH and AEA were not added.

Example 93

The procedures of Example 92 were repeated in the same manner except that 1.0 part by weight of triethylenetetramine was used instead of AEA.

Example 94

The procedures of Example 92 were repeated in the same manner except that the amount incorporated of peroxide (A) was changed to 0.4 part by weight, the amount incorporated of MAH was changed to 1.0 part by weight and the amount incorporated of AEA was changed to 2.0 parts by weight.

Example 95

The procedures of Example 92 were repeated in the same manner except that 30 parts by weight of the oil was incorporated in addition to the starting polymers EPDM (5) and PP.

Example 96

The procedures of Example 95 were repeated in the same manner except that 1.0 part by weight of triethylenetetramine was used instead of AEA.

Example 97

The procedures of Example 95 were repeated in the same manner except that the amount incorporated of peroxide (A) was changed to 0.4 part by weight, the amount incorporated of MAH was changed to 1.0 part by weight and the amount incorporated of AEA was changed to 2.0 parts by weight.

Example 98

The procedures of Example 95 were repeated in the same manner except that a polyurethane foam having a foaming ratio of 40 and a thickness of 4 mm was used instead of the polyurethane sheet.

Example 99

The procedures of Example 95 were repeated in the same manner except that the amounts incorporated of EPDM (5), PP, IIR, the oil, MAH and AEA were changed as shown in Table 12

Comparative Example 10

The procedures of Example 92 were repeated in the same manner except that MAH and AEA were not added.

Example 100

The procedures of Example 92 were repeated in the same manner except that the amounts incorporated of DVB and peroxide (A) were changed.

Example 101

The procedures of Example 95 were repeated in the same manner except that the amounts incorporated of DVB and peroxide (A) were changed.

Table 12

| Composition | E92 | R9 | E93 | E94 | E95 | E96 | E97 | E98 | E99 | R10 | E100 | E101 |
|---|---|---|---|---|---|---|---|---|---|---|---|---|
| EPDM(5) (parts by weight) | 75 | 75 | 75 | 75 | 75 | 75 | 75 | 75 | 55 | 75 | 75 | 75 |
| PP (parts by weight) | 25 | 25 | 25 | 25 | 25 | 25 | 25 | 25 | 45 | 25 | 25 | 25 |
| IIR (parts by weight) | - | - | - | - | 10 | 10 | 10 | 10 | 20 | - | - | 10 |
| oil (parts by weight) | - | - | - | - | 30 | 30 | 30 | 30 | 40 | - | - | 30 |
| maleic anhydride (parts by weight) | 0.5 | - | 0.5 | 1.0 | 0.5 | 0.5 | 1.0 | 0.5 | 0.5 | - | 0.5 | 0.5 |
| N-aminoethylethanolamine (parts by weight) | 1.0 | - | - | 2.0 | 1.0 | - | 2.0 | 1.0 | 1.0 | - | 1.0 | 1.0 |
| triethylenetetramine (parts by weight) | - | - | 1.0 | - | - | 1.0 | - | - | - | - | - | - |
| divinylbenzene (parts by weight) | 0.5 | - | 0.5 | 0.5 | 0.5 | 0.5 | 0.5 | 0.5 | 0.5 | 0.5 | 0.06 | 0.06 |
| peroxide(A) (parts by weight) | 0.3 | - | 0.3 | 0.4 | 0.3 | 0.3 | 0.4 | 0.3 | 0.3 | 0.3 | 0.03 | 0.03 |
| **Physical Properties** | | | | | | | | | | | | |
| gel content of EPDM (% by weight) | 97 | 96 | 97 | 98 | 97 | 97 | 98 | 97 | 55 | 96 | 1 | 2 |
| strength (kgf/cm²) | 98 | 95 | 97 | 97 | 86 | 87 | 87 | 86 | 150 | 97 | 45 | 43 |
| softness: torsion stiffness (kgf/cm²) | 80 | 86 | 80 | 79 | 65 | 69 | 66 | 65 | 420 | 81 | 37 | 30 |
| moldability (g/10min) | 1.0 | 1.5 | 0.9 | 0.7 | 4.5 | 4.3 | 3.5 | 4.5 | 3.5 | 1.1 | 15 | 30 |
| bonding strength (g/cm) | * | below 0.01 | * | * | * | * | * | * | 10.0 | below 0.01 | 900 | 910 |

E176: elastomer layer was laminated with polyurethane foam

*: breaking of substrate

## Claims

1. A thermoplastic elastomer composition which is obtainable by a process comprising dynamically heat-treating at from 150 to 280 °C, in the presence of an organic peroxide:
   (i) a blend comprising 100 parts by weight in total of components (a) and (b) with components (c) and (d); or

29

(ii) a blend comprising 100 parts by weight in total of components (a) and (b) with component (c), and blending under heating at 140 to 250°C the dynamically heat treated product with component (d);

wherein

component (a)     is a peroxide-crosslinkable olefin-type copolymer
component (b)     is an olefin-type plastic
component (c)     is 0.01 to 10 parts by weight of an unsaturated carboxylic acid or an ester or anhydride thereof

and

component (d)     is 0.01 to 10 parts by weight of a monomer containing at least one amino group.

2. A composition according to claim 1 obtainable by dynamically heat treating, in the presence of an organic peroxide, a blend of 100 parts by weight of components (a) and (b) with component (c) and blending under heat the dynamically heat treated product with component (d).

3. A composition according to claim 1 obtainable by dynamically heat treating, in the presence of an organic peroxide, a blend of 100 parts by weight of components (a) and (b) with components (c) and (d).

4. A composition according to any one of claims 1 to 3 wherein the blend to be dynamically heat treated further comprises at least one of components (e), (f) and (g):

wherein component (e)     is 0.01 to 100 parts by weight of a peroxide-noncrosslinkable rubbery substance,
component (f)     is 0.01 to 200 parts by weight of a mineral oil type softener, and
component (g)     is 0.01 to 100 parts by weight of a fibrous filler.

5. A composition according to any one of claims 1 to 4 wherein component (c) is maleic anhydride.

6. A composition according to any one of claims 1 to 5 wherein component (d) is N-aminoethylethanolamine.

7. A laminate comprising a layer (A) of a thermoplastic elastomer according to claim 2 and a layer (B) of a polyurethane.

8. A laminate comprising a layer (A) which is a blend comprising 100 parts by weight of a thermoplastic elastomer composition according to claim 2 and up to 300 parts by weight of an olefin type plastic, and a layer (B) of a polyurethane.

9. A laminate according to claim 8 wherein the olefin type plastic has a melt index of 0.1 to 50 g/10 min.

10. A process for producing a thermoplastic elastomer composition which process comprises dynamically heat-treating at from 150 to 280°C, in the presence of an organic peroxide:

(i) a blend comprising 100 parts by weight in total of components (a) and (b) with components (c) and (d); or
(ii) a blend comprising 100 parts by weight in total of components (a) and (b) with component (c), and
blending under heating at 140 to 250°C the dynamically heat treated product with component (d);
wherein components (a), (b), (c) and (d) are as defined in any one of claims 1, 5 and 6.

11. A process according to claim 10 comprising dynamically heat treating, in the presence of an organic peroxide, a blend of 100 parts by weight of components (a) and (b) with component (c) and blending under heat the dynamically heat treated product with component (d).

12. A process according to claim 10 comprising dynamically heat treating, in the presence of an organic peroxide, a blend of 100 parts by weight of components (a) and (b) with components (c) and (d).

**13.** A process according to any one of claims 10 to 12 further comprising incorporating at least one of components (e), (f) and (g) as defined in claim 4 into the blend prior to dynamically heat treating the blend.

**14.** A process for producing a laminate which comprises forming a layer (A) of a thermoplastic elastomer produced according to claim 11 and laminating layer (A) with a layer (B) of a polyurethane.

**15.** A process for producing a laminate which comprises blending 100 parts by weight of a thermoplastic elastomer produced according to claim 11 with up to 300 parts by weight of an olefin type plastic, forming a layer (A) of the blend and laminating layer (A) with a layer (B) of a polyurethane.

**16.** A process according to claim 15 wherein the olefin type plastic has a melt index of 0.1 to 50g/10 min.

**Patentansprüche**

**1.** Thermoplastische Elastomerzusammensetzung, welche durch ein Verfahren erhältlich ist, umfassend dynamisches Wärmebehandeln bei 150 bis 280°C in Gegenwart eines organisches Peroxids:

(i) einer insgesamt 100 Gewichtsteile umfassenden Mischung der Komponenten (a) und (b) mit den Komponenten (c) und (d);

oder

(ii) einer insgesamt 100 Gewichtsteile umfassenden Mischung der Komponenten (a) und (b) mit der Komponente (c), und Vermischen des dynamisch wärmebehandelten Produktes mit Komponente (d) unter Erwärmung bei 140 bis 250°C;

worin

Komponente (a) ein Peroxid-vernetzbares Copolymer vom Olefin-Typ ist,

Komponente (b) ein Kunststoff vom Olefin-Typ ist,

Komponente (c) 0,01 bis 10 Gewichsteile einer ungesättigten Carbonsäure oder eines Esters oder Anhydrids davon ist,

und

Komponente (d) 0,01 bis 10 Gewichsteile eines mindestens eine Aminogruppe enthaltenden Monomeren ist.

**2.** Zusammensetzung gemäß Anspruch 1, erhältlich durch dynamisches Wärmebehandeln in Gegenwart eines organischen Peroxids einer Mischung aus 100 Gewichsteilen der Komponenten (a) und (b) mit der Komponente (c) und Vermischen des dynamisch wärmebehandelten Produktes mit der Komponente (d) unter Wärme.

**3.** Zusammensetzung gemäß Anspruch 1, erhältlich durch dynamisches Wärmebehandeln in Gegenwart eines organischen Peroxids einer Mischung aus 100 Gewichsteilen der Komponenten (a) und (b) mit den Komponenten (c) und (d).

**4.** Zusammensetzung gemäß mindestens einem der Ansprüche 1 bis 3, wobei die dynamisch wärmezubehandelnde Mischung ferner mindestens eine der Komponenten (e), (f) und (g) umfaßt:

worin

Komponente (e) 0,01 bis 100 Gewichtsteile einer nicht mit Peroxid vernetzbaren kautschukartigen Substanz ist,

Komponente (f) 0,01 bis 200 Gewichtsteile eines Weichmachers vom Mineralöl-Typ ist, und

Komponente (g) 0.01 bis 100 Gewichtsteile eines faserartigen Füllstoffs ist.

**5.** Zusammensetzung gemäß mindestens einem der Ansprüche 1 bis 4, worin Komponente (c) Maleinsäureanhydrid ist.

**6.** Zusammensetzung gemaß mindestens einem der Ansprüche 1 bis 5, worin Komponente (d) N-Aminoethylethanolamin ist.

**7.** Laminat, umfassend eine Schicht (A) eines thermoplastischen Elastomeren gemäß Anspruch 2 und eine Schicht (B) eines Polyurethans.

**8.** Laminat, umfassend eine Schicht (A), welche eine Mischung aus 100 Gewichtsteilen einer thermoplastischen Elastomerzusammensetzung gemäß Anspruch 2 und aus bis zu 300 Gewichtsteilen eines Kunststoffes vom Olefin-Typ ist, und eine Schicht (B) eines Polyurethans.

**9.** Laminat gemäß Anspruch 8, worin der Kunststoff vom Olefin-Typ einen Schmelzindex von 0,1 bis 50 g/10 min besitzt.

**10.** Verfahren zur Herstellung einer thermoplastischen Elastomerzusammensetzung, welches Verfahren das dynamische Wärmebehandeln bei 150 bis 280°C in Gegenwart eines organischen Peroxids:

(i) einer Mischung aus insgesamt 100 Gewichtsteilen der Komponenten (a) und (b) mit den Komponenten (c) und (d);

oder

(ii) einer Mischung aus insgesamt 100 Gewichtsteilen der Komponenten (a) und (b) mit der Komponente (c) und Mischen des dynamisch wärmebehandelten Produktes mit der Komponente (d) unter Erwärmung bei 140 bis 250°C umfaßt:

worin die Komponenten (a), (b), (c) und (d) die gleiche Bedeutung haben wie in mindestens einem der Ansprüche 1, 5 und 6.

**11.** Verfahren gemäß Anspruch 10, umfassend das dynamische Wärmebehandeln in Gegenwart eines organischen Peroxids einer Mischung aus 100 Gewichtsteilen der Komponenten (a) und (b) mit Komponente (c) und Mischen des dynamisch wärmebehandehen Produktes mit Komponente (d) unter Wärme.

**12.** Verfahren gemäß Anspruch 10, umfassend das dynamische Wärmebehandeln in Gegenwart eines organischen Peroxids einer Mischung aus 100 Gewichtsteilen der Komponenten (a) und (b) mit den Komponenten (c) und (d).

**13.** Verfahren gemäß mindestens einem der Ansprüche 10 bis 12, ferner umfassend das Einbringen mindestens einer der Komponenten (e), (f) und (g), wie in Anspruch 4 definiert, in die Mischung vor dem dynamischen Wärmebehandeln der Mischung.

**14.** Verfahren zur Herstellung eines Laminats, welches die Bildung einer Schicht (A) eines thermoplastischen Elastomeren, hergestellt gemäß Anspruch 11, und Laminieren der Schicht (A) mit einer Schicht (B) aus einem Polyurethan umfaßt.

**15.** Verfahren zur Herstellung eines Laminats, welches das Mischen von 100 Gewichtsteilen eines thermoplastischen Elastomeren, hergestellt gemäß Anspruch 11, mit bis zu 300 Gewichtsteilen eines Kunststoffs vom Olefin-Typ, das Formen einer Schicht (A) aus der Mischung und das Laminieren der Schicht (A) mit einer Schicht (B) eines Polyurethans umfaßt.

**16.** Verfahren gemäß Anspruch 15, worin der Kunststoff vom Olefin-Typ einen Schmelzindex von 0.1 bis 50 g/10 min besitzt.

**Revendications**

**1.** Composition élastomère thermoplastique que l'on peut obtenir par un procédé comportant le fait de traiter dynamiquement et à chaud, à une température de 150°C à 280°C et en présence d'un peroxyde organique :

i) un mélange comprenant au total 100 parties en poids des composants (a) et (b), ainsi que les composants (c) et (d) ; ou bien

ii) un mélange comprenant au total 100 parties en poids des composants (a) et (b), ainsi que le composant (c),

et dans ce cas, le fait de mélanger le produit traité dynamiquement et à chaud et le composant (d), tout en chauffant le tout à une température de 140°C à 250°C ;

où

le composant (a) est un copolymère oléfinique, que l'on peut réticuler à l'aide d'un peroxyde,

le composant (b) est une matière plastique oléfinique,

le composant (c) est constitué par 0,01 à 10 parties en poids d'un acide carboxylique ou d'un

ester ou d'un anhydride d'un tel acide,

et

le composant (d) est constitué par 0,01 à 10 parties en poids d'un monomère comportant au moins un groupe amino.

2. Composition conforme à la revendication 1, que l'on peut obtenir en traitant dynamiquement et à chaud, en présence d'un peroxyde organique, un mélange de 100 parties en poids des composants (a) et (b) et du composant (c), et en mélangeant à chaud le produit traité dynamiquement et à chaud et le composant (d).

3. Composition conforme à la revendication 1, que l'on peut obtenir en traitant dynamiquement et à chaud, en présence d'un peroxyde organique, un mélange de 100 parties en poids des composants (a) et (b) et des composants (c) et (d).

4. Composition conforme à l'une des revendications 1 à 3, dans laquelle le mélange que l'on traite dynamiquement et à chaud contient en outre au moins l'un des composants (e), (f) et (g),

où

le composant (e) est constitué par 0,01 à 100 parties en poids d'une matière caoutchouteuse que l'on ne peut pas réticuler à l'aide d'un peroxyde,

le composant (f) est constitué par 0,01 à 200 parties en poids d'un plastifiant de type huile minérale,

et

le composant (g) est constitué par 0,01 à 100 parties en poids d'une charge fibreuse.

5. Composition conforme à l'une des revendications 1 à 4, dans laquelle le composant (c) est de l'anhydride maléique.

6. Composition conforme à l'une des revendications 1 à 5, dans laquelle le composant (d) est de la N-aminoéthyl-éthanolamine.

7. Stratifié comportant une couche (A) en une composition élastomère thermoplastique conforme à la revendication 2, et une couche (B) en polyuréthane.

8. Stratifié comportant une couche (A), constituée d'un mélange comprenant 100 parties en poids d'une composition élastomère thermoplastique conforme à la revendication 2 et jusqu'à 300 parties en poids d'une matière plastique oléfinique, et une couche (B) en polyuréthane.

9. Stratifié conforme à la revendication 8, dans lequel la matière plastique oléfinique présente un indice de fluidité à chaud valant de 0,1 à 50 g/10 min.

10. Procédé de production d'une composition élastomère thermoplastique, lequel procédé comporte le fait de traiter dynamiquement et à chaud, à une température de 150°C à 280°C et en présence d'un peroxyde organique :

i) un mélange comprenant au total 100 parties en poids de composants (a) et (b), ainsi que les composants (c) et (d) ; ou bien

ii) un mélange comprenant au total 100 parties en poids de composants (a) et (b), ainsi que le composant (c),

et, dans ce cas, le fait de mélanger le produit traité dynamiquement et à chaud et le composant (d), tout en chauffant le tout à une température de 140°C à 250°C ;

les composants (a), (b), (c) et (d) étant tels qu'on les a définis dans l'une des revendications 1, 5 et 6.

11. Procédé conforme à la revendication 10, qui comporte le fait de traiter dynamiquement et à chaud, en présence d'un peroxyde organique, un mélange de 100 parties en poids des composants (a) et (b) et du composant (c), et le fait de mélanger à chaud le produit traité dynamiquement et à chaud et le composant (d).

**12.** Procédé conforme à la revendication 10, qui comporte le fait de traiter dynamiquement et à chaud, en présence d'un peroxyde organique, un mélange de 100 parties en poids des composants (a) et (b) et des composants (c) et (d).

**13.** Procédé conforme à l'une des revendications 10 à 12, qui comporte en outre le fait d'incorporer dans le mélange, avant de traiter celui-ci dynamiquement et à chaud, au moins l'un des composants (e), (f) et (g) définis dans la revendication 4.

**14.** Procédé de fabrication d'un stratifié, qui comporte le fait de former une couche (A) d'une composition élastomère thermoplastique produite conformément à la revendication 11, et le fait de stratifier cette couche (A) avec une couche (B) de polyuréthane.

**15.** Procédé de fabrication d'un stratifié, qui comporte le fait de mélanger 100 parties en poids d'une composition élastomère thermoplastique produite conformément à la revendication 11 et jusqu'à 300 parties en poids d'une matière plastique oléfinique, le fait de former une couche (A) du mélange obtenu et le fait de stratifier cette couche (A) avec une couche (B) de polyuréthane.

**16.** Procédé conforme à la revendication 15, dans lequel la matière plastique oléfinique présente un indice de fluidité à chaud valant de 0,1 à 50 g/10 min.